# EUROPEAN PATENT SPECIFICATION

(11) **EP 2 964 360 B1**
(45) Date of publication and mention of the grant of the patent: **11.09.2019**
(21) Application number: 14760955.6
(22) Date of filing: 08.03.2014
(51) Int. Cl.: B01L 3/00, B03C 1/00

(54) **DEVICES, SYSTEMS, AND METHODS FOR ACOUSTICALLY -ENHANCED MAGNETOPHORESIS**
VORRICHTUNGEN, SYSTEME UND VERFAHREN FÜR AKUSTISCH VERSTÄRKTE MAGNETOPHORESE
DISPOSITIFS, SYSTÈMES ET PROCÉDÉS POUR MAGNÉTOPHORÈSE ACOUSTIQUEMENT AMÉLIORÉE

(30) Priority: 08.03.2013 US 201361775114 P
(43) Date of publication of application: 13.01.2016
(73) Proprietor: Duke University, Durham, NC 27705 (US)
(72) Inventor: LOPEZ, Gabriel, P., Durham, NC 27705 (US); GAO, Lu, Chapel Hill, NC 27514 (US); YELLEN, Benjamin, B., Durham, NC 27705 (US); MURDOCH, David, M., Chapel Hill, NC 27516 (US)
(74) Representative: Miller, David James
(86) International application number: PCT/US2014/022187
(87) International publication number: WO 2014/138715

(56) References cited:
- WO-A1-03/066191
- WO-A1-2010/132862
- WO-A2-2012/027366
- WO-A2-2012/135663
- US-A- 4 523 682
- US-A1- 2008 302 732
- US-A1- 2010 139 377
- US-A1- 2010 304 429
- US-A1- 2011 127 222
- US-A1- 2012 160 746
- US-A1- 2013 048 565
- US-B1- 6 387 290

## Description

### CROSS REFERNCE TO RELATED APPLICATIONS

This application claims the benefit of U.S. provisional patent application number 61/775,114 filed March 8, 2013.

### FEDERAL FUNDING LEGEND

The invention was made with government support under Grant No.'s EAGER CBET-1050176 entitled "Elastomeric Capture Microparticles for High Sensitivity Biodetection;" MRSEC DMR-1121107 entitled "Research Triangle Material Research Science and Engineering Center;" and CMMI 0800173 entitled "Non-linear magnetic separation of colloidal particles" each awared by the National Science Foundation. The government has certain rights in the invention.

### TECHNICAL FIELD

The presently disclosed subject matter relates to devices, systems, and methods for acousitically enhanced magnetophoresis for sorting of target objects from a plurality of objects. More specifically, the target objects for sorting can include biological material such as cells, bacteria, viruses, proteins, and nucleic acids.

### BACKGROUND

Techniques to rapidly sort different types of cells from a blood sample are of interest in scientific research, the biotechnology industry and medicine. Fluorescence activatecd cell sorting (FACS) is now a conventional and standard methodology, but it requires very expensive equipment and is inherently limited by the serial nature of single cell optical sorting. Existing alternative techniques such as centrifugation (using the variation of the density of different cells) and magnetophoresis (using micro/nano magnetic beads to label the cells of interest) have been widely used for the past few decades as parallel sorting techniques. Shortcomings of these common batchwise processes include the following: (i) they are typically non-continuous, e.g., requiring serial trap / release procedures (see, e.g., product description of MACS® from Miltenyl Biotech, Inc. https://www.miltenyibiotec.com/en/Products-and-Services/MACS-Cell-Separation/Manual-cell-separation/Separators.aspx, J. Verbarg et al. Spinning magnetic trap for automated microfluidic assay systems. Lab on a Chip, 2012 (12): 1793-1799); (ii) they may require manual operations to collect the separated cells (see. e.g., C.T. Yavuz, et al. (2006) *supra*), or (iii) they do not provide for an automated method to count sorted cells. Simultaneous achievement of high throughput continuous sorting and high purity at low cost is a serious bottleneck, particularly for the case of extracting particular cells at low concentrations from complex cellular mixtures (e.g., specific lymphocytes, progenitor cells or circulating cancer cells from the other peripheral blood cells).

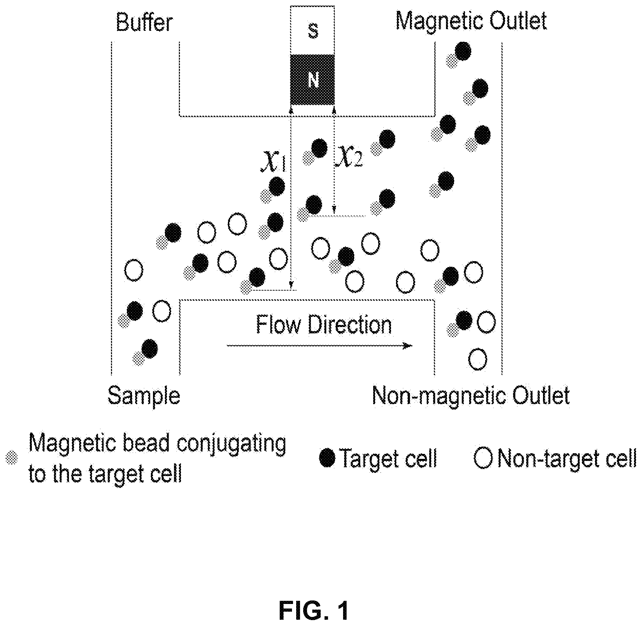

The Burgeoning growth of microfluidic devices in recent years has provided alternative new platforms to perform cellular sorting on a continuous manner (e.g., J. J. Lai et al. Dynamic bioprocessing and microfluidic transport control with smart magnetic nanoparticles in laminar-flow devices. Lab on a Chip, 2009 (9): 1997-2002; M. Zborowski, et al. Continuous cell separation using novel magnetic quadruple flow sorter. Journal of Magnetism and Magnetic Materials, 1999 (194): 224-230). Numerous researchers have performed cellular extraction by (i) labeling the cells of interest with biofunctionalized particles, (ii) slowly injecting a small amount of the sample into a microfluidic channel that allows laminar flow (flow without turbulence or mixing) and (ii) applying an external field (e.g., electric field, magnetic field, acoustic field or laser). This process is termed magnetophoresis when using a magnetic field. The applied magnetic field affects the magnetically labeled cells of interest and laterally diverts the labeled cells to the desired streamlines, which eventually flow to the target outlet. For existing magnetophoretic devices, a typical layout is the H-Filter as shown in Fig. 1 (see, e.g., J.J. Lai *et al*. (2009) *supra*).

Magnetophoresis has several advantages including: low cost, electrochemical stability, and commercially available biofunctionalized magnetic particles. However, the conventional magnetic sorting design suffers from the highly inhomogenous behavior of the magnetic dipole force interaction, which requires a strong field gradient, and severely limits the efficiency and throughput of the device. Specifically, the magnetic force is extremely sensitive to the distance between the magnetic bead and the permanent magnet, electromagnet, or other field source. To illustrate this point, two magnetic bead/cell couples were labeled in different streamlines in Fig. 1 to show that the difference in their distance from the magnet will cause them to experience very different magnetic forces. Therefore, the sample needs to be injected into the device at a sufficiently low flow rate such that all the labeled cells, even those far away from the magnet, have enough residence time in the separation channel to be extracted by the magnetic field into the streamlines that lead to the target outlet for the magnetically labeled cells. The cells furthest away from the magnetic source thus represent a bottleneck in this system that severely limits the throughput that can be achieved using the simple H-filter magnetic device to flowrates on the order of 10 µL/min (see, e.g., J.J. Lai *et al*. (2009) *supra*).

US 4,523,682 A relates to a method which uses acoustic energy to separate particles of different sizes, densities, or the like. WO 2012/027366 relates to the control and manipulation of fluidic species, for example in microfluidic systems.

Accordingly, there remains an unmet need for improved devices and methods for sorting cells. The present disclosure provides such improved devices and methods.

### Summary of the Invention

The present disclosure provides systems and devices for acoustically enhanced magnetophoresis, methods of use, methods of manufacture, and related aspects. The systems, devices and methods described herein allow for several advantages over the prior art, including, but not limited to, higherthroughput, capability of continuous cell separation and sorting; compatibility to automatic cell counting mechanisms; compatibility with automatic target cell delivery for downstream processing (e.g., bioanalysis, culture, etc.); with acoustic pre-focusing and constraining, the ability to simultaneously highly purifiy both labeled and unlabeled groups of cells; and both of the positive sorting or negative sorting (e.g., the material of interest could be either magnetically labeled or unlabeled, respectively). Based on the disclosure that is contained herein, the present invention provides a microfluidic sorting device (200) comprising:
(i) a substrate (201) comprising at least one channel (202) operable to receive a fluid composition (203) that includes a plurality of magnetic and non-magnetic objects (203a), the channel (202) defining a width that is constant for the entire length thereof up to a bifurcation point (209) and comprising at least one inlet end (204), at least one magnetic exit end (205), and at least one non-magnetic exit end (205);
(ii) an acoustic module (206) positioned in operable communication with the substrate (201) and capable of inducing an acoustic standing wave across the at least one channel (202) such that substantially all of the magnetic and non-magnetic objects (203a) in the fluid composition (203) are focused and constrained in a band to a predetermined region within the channel (202);
(iii) at least one magnetic module (207) positioned in operable communication with the substrate (201) and capable of imparting a magnetic force to the focused and constrained magnetic objects; and
(iv) the bifurcation point (209) positioned within the channel (202) such that the magnetic objects can be deflected away from the non-magnetic objects when the magnetic force overcomes the acoustic standing wave to allow for the magnetic objects to exit at the magnetic exit end (205)
wherein the at least one magnetic module (207) is downstream of the acoustic module (206).

In another aspect, the present invention provides a method of sorting an object from a plurality of objects in a device, the method comprising:
delivering a fluid composition (203) that includes a plurality of objects to an inlet end (204) of a channel (202) of a device (200), wherein the channel (202) defines a width that is constant for the entire length thereof up to a bifurcation point (209) and comprising at least one magnetic exit end (205) and at least one non-magnetic exit end (205) thereby causing the objects to move along a flow path, wherein at least a portion of the objects are labeled with a particle that is responsive to a magnetic force;
inducing an acoustic standing wave across the channel such that substantially all of the magnetic and non-magnetic objects (203a) in the fluid composition (203) are focused and constrained in a band to a predetermined region within the channel (202); and
imparting a magnetic force to the focused and constrained magnetic objects, thereby causing the magnetic objects to deviate from the flow path away from the non-magnetic objects at a bifurcation point (209) when the magnetic force overcomes the acoustic standing wave to allow for exit of the magnetic objects at the magnetic exit end (205)
wherein the magnetic force is downstream of the induced acoustic standing wave.

The present invention and embodiments thereof are set out in the appended claims.

In some embodiments, the device further comprises at least one delivery module positioned in operable communication with the first inlet end to cause the plurality of objects to move along a flowpath in the channel.

In other embodiments, the device further comprises at least one collection module in operable communication with at least one of the at least two exit ends, the collection module arranged to collect one or more target objects exiting the channel.

In other embodiments, the device further comprises a lid. In some embodiments, the lid is placed over the substrate and is removable. In other embodiments, the lid is bonded to the substrate.

In some embodiments, the bifurcation point is slightly deviated from the central axis of the channel. In some embodiments, the bifurcation point is between 45 µm to about 130 µm from the center axis. In certain embodiments, the bifurcation is 80 µm from the center axis.

In some embodiments, the flow rate is between 10 µL/min and 300 µL/min. In other embodiments, the flow rate is between 50 µL/min and 300 µLm/min. In other embodiments, the flow rate is between 100 µLm/min and 300 µLm/min.

In some embodiments, the channel width is between 200 µm and 300 µm. In other embodiments, the channel width is between 250 µm and 300 µm. In certain embodiments, the channel width is 300 µm.

In yet another embodiment, the plurality of objects comprises a biological material. In some embodiments, the plurality of objects is selected from cells, viruses, proteins, nucleic acids and combinations thereof. In certain embodiments, the object comprises a cell.

In some embodiments, the acoustic module comprises a piezoelectic transducer. In certain embodiments, the acoustic module comprises lead zirconate titanate-PZT. In other embodiments, the acoustic module comprises a surface acoustic wave substrate (SAW). In certain embodiments, the SAW comprises a piezoelectric substrate and an interdigitated electrode (IDE, also known as interdigitated transducer -IDT).

In other embodiments, the magnetic module is selected from the group consisting of one or more ferromagnetic elements, one or more permanent magnets, one or more electromagnets, and combinations thereof. In certain embodiments, the magnetic module comprises one or more electromagnets.

In some embodiments, the substrate and lid comprise a material having an acoustic impedance greater than 1.49 impedance/10⁶ kg m⁻² s. In some embodiments, the substrate and/or lid is slected from the group consisting of plastic, silicon, pyrex, aluminum, commercial high acoustic impedance thermoplastic (e.g., W Type from LATI). In certain embodiments, the substrate comprises silicon. In other embodiments, the lid comprises pyrex.

In some embodiments, the target objects collected comprise objects that have been specifically labeled with a particle responsive to the magnetic field. In other embodiments, the target objects collected comprise objects that have not been specifically labeled with a particle responsive to the magnetic field.

Yet another aspect of the present disclosure provides for all that is disclosed and illustrated herein.

### Brief Description of the Drawings

The foregoing aspects and other features of the invention are explained in the following description, taken in connection with the accompanying drawings, wherein:
**FIG. 1** is a schematic illustration showing a top view of a conventional H-Filter for cellular sorting (not to scale).

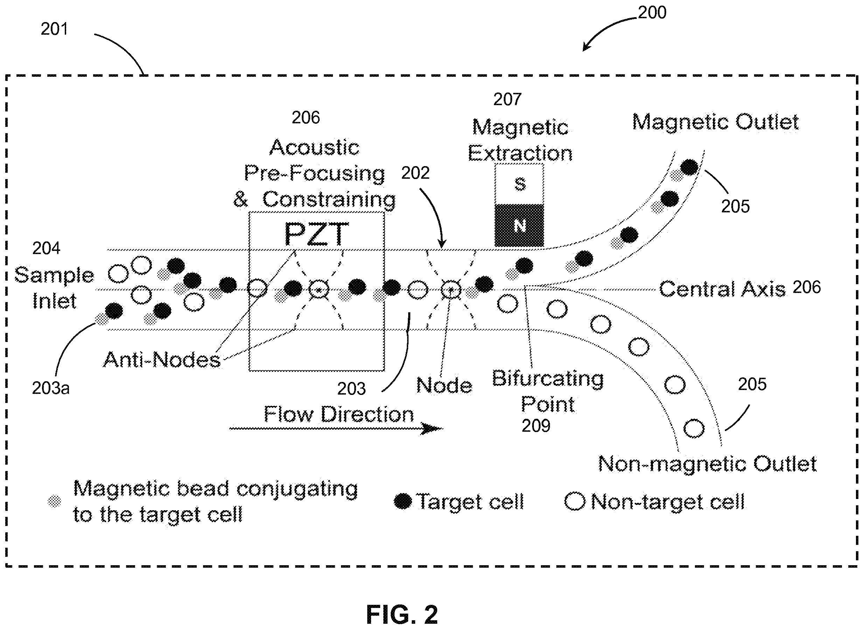

**FIG. 2** is a schematic illustration showing a top view of the basic acoustically-enhanced magnetophoresis device according to one or more embodiments of the present disclosure. A half wavelength acoustic standing wave is shown. The node (*i*.*e*., at which the pressure is consistent) aligns with the central axis of the channel. Exposed to the standing wave, both of the labeled (Target) and unlabeled (Non-target) cells are focused and constrained within a tight band around the central streamline.

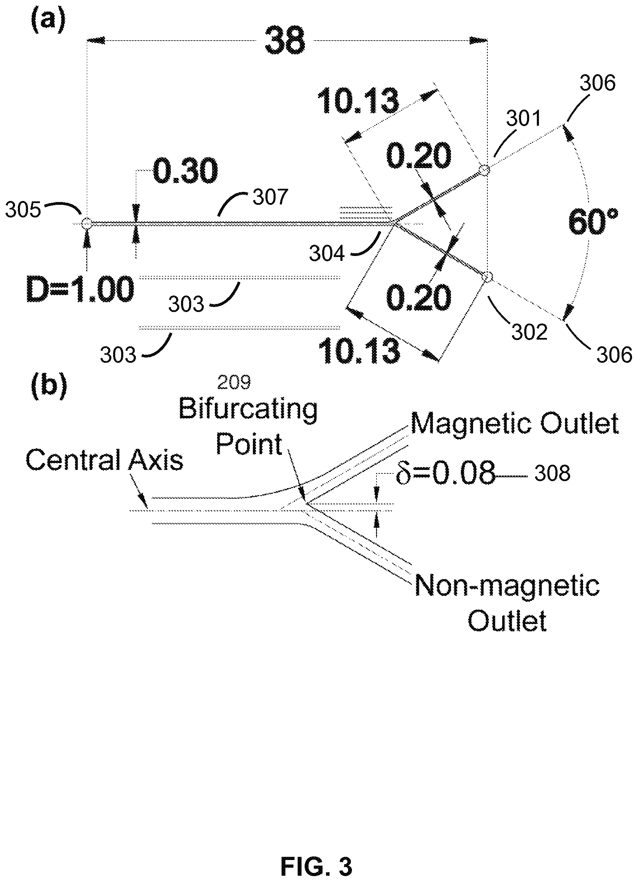

**FIG. 3** is a schematic showing a substrate design (in scale, the unit is millimeter) in accordance with one embodiment of the present disclosure. (**A**) Overall layout of the magnetophoresis device. The upper branch is the outlet for the magnetically labeled objects while the lower branch is the outlet for the unlabeled objects. Several trenches are designed along the channel and near the bifurcating point as the land makers to position and bond the piezoelectric transducer (e.g., lead zirconate titanate - PZT) and magnets. (**B**) A zoom in illustration of the regime near the bifurcating point. The deviation of the bifurcating point from the central axis, donated by δ, is 80µm.

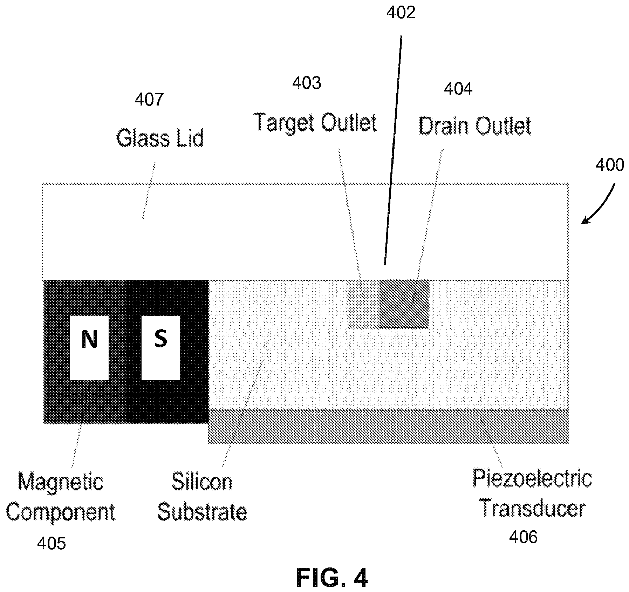

**FIG. 4** is a schematic illustration of a cross section at the outlet for a magnetophoresis device according to one or more embodiments of the present disclosure. A magnetic module (e.g., permanent magnet, solenoidal coil) is bonded to one side of the device that is close to the target outlet.
**FIG.'s 5A-5B** is a schematic illustration showing a top view of another magnetophoresis device according to one or more embodiments of the present disclosure. (**A**) shows a magnetophoresis device comprising a double node fluidic channel; (**B**) shows a high throughput (HT) magnetophoresis device comprising multiple nodes.

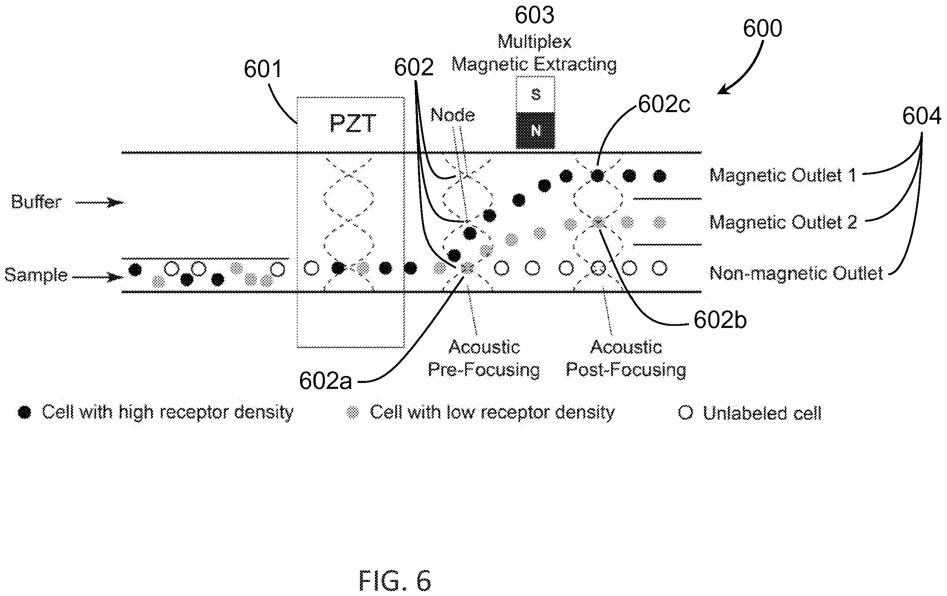

**FIG. 6** is a schematic illustration showing a top view of another magnetophoresis device according to one or more embodiments of the present disclosure wherein the device is used for multiplex sorting of cells according to receptor density.
**FIG.'s 7A-7B** are schematic illustrations showing a top view of the magnetophoresis device shown in FIG 2 wherein (**A**) the device comprises a module of circulation according to one or more embodiments of the present disclosure and (**B**) two or more devices are placed in series according to one or more embodiments of the present disclosure.
**FIG.'s 8A-8B** are confocal microscopy images of a magnetophoresis device according to one or more embodiments of the present disclosure showing a cross section of the device channel (**A**) without an acoustic field (PZT OFF) showing the uniform distribution of the rigid entities and (**B**) with an acoustic field (PZT ON) showing the acoustic field focusing and constraining the rigid objects such that the rigid objects are confined within a tight band around the center.
**FIG.'s 9A-9D** are diagrams showing (**A**) the fabrication procedure of a magnetophoresis device; (**B**) the layout of the microfluidic channel; and (**C**) a picture of the front and (**D**) back side of a completed magnetophoresis device in accordance with one or more embodiments of the present disclosure.
**FIG.'s 10A-B** are diagrams showing (**A**) a front side and (**B**) a back side of a magnetophoresis device in accordance with one or more embodiments of the present disclosure.
**FIG.'s 11A-11B** are images showing magnetically-labeled lymphocytes being focused and constrained in a narrow band in a magnetophoresis device according to one or more embodiments of the present disclosure.

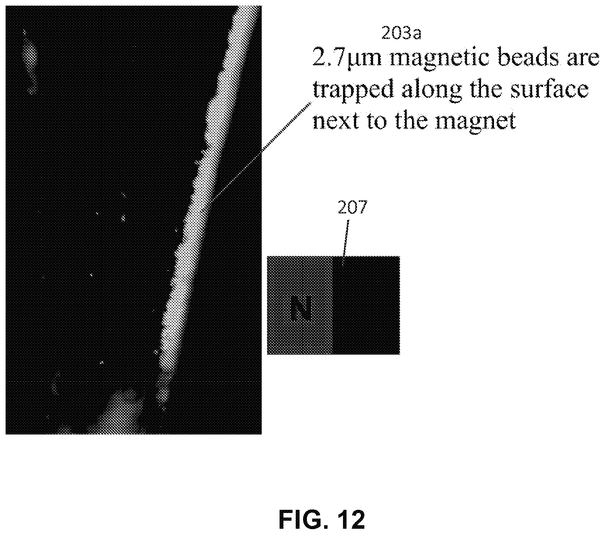

**FIG. 12** is an image showing that objects with high magnetic movement are strongly attracted to the magnet in a magnetophoresis device according to one or more embodiments of the present disclosure.
**FIG.'s 13A-13F** are images and graphs showing separation of magnetic beads from non-magnetic beads using a magnetophoresis device in accordance with one or more embodiments of the present disclosure. Panels (**A**), (**C**), and (**E**) correspond to non-magnetic beads and panels (**B**), (**D**), and (**F**) correspond to magnetic beads. Panels (**A**)-(**D**) are top view confocal microscopy images showing magnetic and non-magnetic beads within a magnetophoresis device in which a 6,35 mm (¼ inch) magnetic cube was bonded on the right side to the bifurcating point and 1mm apart from the microfluidic channel. (**A**) Flow rate was 200µL/min. Without the acoustic focusing and constraining, the non-magnetic beads uniformly distributed across the microchannel and entered both outlets. (**B**) Flow rate was 100µL/min. Without the acoustic field, the beads near the magnet were rapidly trapped by the magnetic field. Beads began to aggregate and eventually block the branch and shielded the magnetic field. (**C**) & (**D**) Flow rate was 200µL/min and 100µL/min, respectively. When acoustic field is applied, the non-magnetic beads and magnetic beads entered two distinct outlets as planned. (**E**) & (**F**) are the outcomes of the flow cytometry performed on the samples collected from the two outlets for the tests shown in (**C**) & (**D**). The overwhelming majority of the non-magnetic and magnetic beads entered the expected outlets.
**FIG.'s 14A-14E** are schematic diagrams showing different layouts of the magnetophoresis device in accordance with one or more embodiments of the present disclosure.
**FIG.'s 15A-15B** are an image and a graph showing separation of magnetic beads from non-magnetic beads using a magnetophoresis device in accordance with one or more embodiments of the present disclosure. (**A**) A top view confocal microscopy image showing magnetic and non-magnetic beads within a channel of the device and (**B**) a graph showing the populations of each of the magnetic and non-magnetic beads at each magnetic and non-magnetic outlet.

### DETAILED DESCRIPTION OF THE INVENTION

For the purposes of promoting an understanding of the principles of the present disclosure, reference will now be made to preferred embodiments and specific language will be used to describe the same. It will nevertheless be understood that no limitation of the scope of the disclosure is thereby intended, such alteration and further modifications of the disclosure as illustrated herein, being contemplated as would normally occur to one skilled in the art to which the disclosure relates.

Articles "a" and "an" are used herein to refer to one or to more than one (i.e. at least one) of the grammatical object of the article. By way of example, "an element" means at least one element and can include more than one element.

Unless otherwise defined, all technical terms used herein have the same meaning as commonly understood by one of ordinary skill in the art to which this disclosure belongs.

The present disclosure provides, among other things, systems and devices for acoustically enhanced magnetophoresis, methods of use, methods of manufacture, and related aspects. The systems, devices and methods described herein allow for several advantages over the prior art, including, but not limited to, higherthroughput, capability of continuous cell separation and sorting; compatibility to automatic cell counting mechanisms; compatibility with automatic target cell delivery for downstream processing (e.g., bioanalysis, culture, etc.); and, with acoustic pre-focusing, the ability to simultaneously highly purifiy both labeled and unlabeled groups of cells. The following aspects and embodiments are described in relation to a sorting system, devices and methods wherein the material to be sorted comprises objects having different characteristics, with the desire being to sort objects according to one or more of the characteristics. As used herein, the term "plurality of objects" refers to any object that can be magnetically labeled and/or charged such that it can be sorted using the system and devices described herein. Objects preferably include biological material, such as cells, bacteria, proteins, viruses, nucleic acids and the like. It should be understood that embodiments of the present disclosure are not limited to biological or even organic samples, but extend to non-biological and inorganic materials (e.g., nanospheres, colloids, magnetic beads, etc.). Thus, the systems, devices and methods described herein can be used to screen, analyze, modify, or otherwise process a wide range of biological and non-biological substances in a fluid composition. The target and/or non-target objects may include small or large chemical entities of natural or synthetic origin such as chemical compounds, supermolecular assemblies, proteins, organelles, fragments, glasses, ceramics, etc. In certain embodiments, they are monomers, oligomers, and/or polymers having any degree of branching. In some embodiments, such non-biological objects may be used along or be attached to one or more biological component (e.g., cells).

The objects to be sorted are preferably in a fluid composition which allows for the objects to flow through the system and/or device. As used herein, the term "fluid" refers to those substances that flow and optionally take the shape of a container. The fluid composition may comprise water, biological buffer, and the like. Such fluid will be dependent on the object being sorted, and can be readily determined by one skilled in the art.

The term "magnetic" is in some instances used herein interchangeably with the term "target" for the purposes of the specification, claims, and drawings. For example, the drawings may refer to a "target" object in some instances and to a "magnetic" or "magnetically labeled" object in other instances. This convention is not meant to be limiting, as there can be embodiments of the present disclosure where the target objects are not magnetically labeled and instead the device, system, and methods provided herein are used as a negative selection to separate the unlabeled target objects from the magnetically labled non-target objects. Similarly, The term "non-magnetic" is in some instances used herein interchangeably with the terms "non-target" or "drain" or "waste" or "unlabled" for the purposes of the specification, claims, and drawings.

The term "exit end" is in some instances used herein interchangeably with the term "outlet" or "drain" or "waste" for the purposes of the specification, claims, and drawings. For example, the term "magnetic exit end" can be referred to herein as "magnetic outlet" or "target outlet" or "target". Similarly, for example, the term "non-magnetic exit end" can be referred to herein as "non-magnetic outlet" or "non-magnetic" or "waste outlet" or "waste" or "drain " or "drain outlet" or "non-target" or "non-target outlet".

An example of a microfluidic sorting device **200** in accordance with the present disclosure is shown in FIG 2. The device comprises a substrate **201** comprising at least one channel **202** operable to receive a fluid composition **203** comprising a plurality of objects **203a,** and where the channel comprises at least one inlet **204** end and at least two exit ends **205**. As used herein, the term "at least two exit ends" are also referred to as "target" and "drain", wherein "target" refers to the exit end where the objects desired to be collected exit the channel and "drain" refers to the exit end where objects not wanted to be collected exit the channel. The fluid composition can be added by a delivery module (not shown) positioned in operable communication with the inlet **204** end thereby causing the plurality of objects **203a** to move along a flowpath (represented by arrow) in the channel.

As used herein, the term "flow rate" refers to the instantaneous volume of the sample flowing throw a cross section of the microchannel, and is proportional to the term throughput supra.The pressure, or pressure drop, can change depending on factors that are not central to the device. For the systems and devices provided herein, an optimal flow rate is desired for optimal performance. A flow rate that is too high does not allow sufficient residence time for the objects to be focused. A flow rate that is too low risks that the magnetic field will trap the labeled objects inside the channel. Hence, the system and devices described herein are capable of having a flow rate of at least 10µL/min, 20µL/min, 30µL/min, 40µL/min, 50µL/min, 60µL/min, 70µL/min, 80µL/min, 90µL/min, 100µL/min, 125µL/min, 150µL/min, 175µL/min, 200µL/min, 225µL/min, 250µL/min, 275µL/min, 300µL/min, 325µL/min, 350µL/min, 375µL/min, 400µL/min or greater. In some embodiments, a flow rate of 200 µL/min is sufficient to efficiently focus objects and guide them to an exit end of the channel. A flow rate of 100 µL/min can be sufficient to allow for magnetic separation of the objects. As used herein, the unit µL/min stands for micro liter per minute, where 1 µL/min = 1.67 x 10⁻⁷ m³ / second as in International System of Units while m represents meter.

The device of the present disclosure further comprises an acoustic module **206** positioned in operable communication with the substrate **201** where the acoustic module **206** is capable of producing an acoustic standing wave across the channel **202** such that substantially all of the objects in the fluid compostion are focused and constrained to a predetermined region (e.g., the central axis of the channel) **208** within the channel **202**. The acoustic module may be any device that is capable of generating an acoustic wave across the channel. In some embodiments, the acoustic module comprises a piezoelectric transducer. In certain embodiments, the acoustic module comprises a lead zirconate titanate-PZT. In other embodiments, the acoustic module comprises a surface acoustic wave substrate (SAW). In certain embodiments, the SAW comprises a piezoelectric substrate and an interdigitated electrode (IDE). In some embodiments, the acoustic module is bonded to the substrate. The acoustic module generates an acoustic wave across the channel that rapidly and efficiently focuses the objects (e.g., cells) to a specific region within the channel. In some embodiments, the objects are focused and constrained along the central axis of the channel, however, it is within the scope of the present disclosure that the objects can be focused and constrained anywhere within the channel. In some embodiments, the wavelength of the acoustic wave is 1 to 2x the channel width. In other embodiments, the acoustic wave is ½ the channel width. For example, when the acoustic wave has a wavelength equal to twice the channel width, the objects are focused and constrained within a tight band along the central streamlines of the channel (upstream from the magnet).

The device also comprises a magnetic module **207** positioned in operable communication with the substrate **201** and downstream from the acoustic module **206.** The magnetic module **207** is capable of imparting magnetic field conditions for substantially all focused objects. The magnetic module may comprise any means of imparting a magnetic field within the channel. Such module may include one or more ferromagnetic elements, one or more permanent magnets, one or more electromagnets (e.g., solenoidal coil), and the like. Also within the scope of the present disclosure are combinations of magnetic modules. In some embodiments, the magnetic module is bonded to the substrate. The focusing and constraining of the objects by the acoustic module allows for the magnetic force applied to the objects by the magnetic module to be homogenous, thereby removing the bottleneck of traditional continuous microfluidic magnetic separations currently available. In some embodiments, the magnetic module is positioned near the point of bifurcation. In one embodiment, several 6,35 mm (¼ inch) magnetic cubes may be bonded downstream from the acoustic module to extract the magnetically labeled objects. In another embodiment, a solenoidal coil may be used. Such an embodiment presents several advantages, including the ability to turn on/off the magnetic field; and for allowing for real time control of the magnetic field.

Within the channel is at least one bifurcation point **209** to cause the objects to deviate from the flow path in an amount at least partially dependent on the magnetic field imparted on the object. In some embodiments, the bifurcating point is a sharp angle to allow for more accuarate sorting. In other embodiments, the bifurcating point is minimally deviated from the central axis along which the objects are acoustically confined to allow the magnetic or magnetically labeled objects to migrate only a minimal distance to enter a target outlet. The optimum offset difference of the bifurcation point will depend on several factors, including the bandwidth of the acoustic focusing (i.e., the special extent of the spread of the acoustically focused objects), but must be at least larger than the half bandwidth. For example, for a channel having a size of 300 µm, the point of bifurcation can range from about 45 µm to about 130 µm. Therefore, in some embodiments the bifurcation point is deviated between 15 µm and 150 µm, 25 µm and 140 µm, 35 µm and 130 µm, 45 µm and 125 µm and 50 µm to 120 µm from the central axis. In certain embodiments, the bifurcation point is deviated between 50 µm to 120 µm from the central axis. In other certain embodiments, the bifurcation point is deviated 80 µm from the central axis.

In one embodiment, a microfluidic sorting device **200** is provided comprising: (i) a substrate **201** comprising at least one channel **202** operable to receive a fluid composition **203** that includes a plurality of magnetic and non-magnetic objects **203a**, the channel **202** defining a width that is constant for the entire length thereof up to a bifurcation point **209** and comprising at least one inlet end **204**, at least one magnetic exit end **205**, and at least one non-magnetic exit end **205**; (ii) an acoustic module **206** positioned in operable communication with the substrate **201** and capable of inducing an acoustic standing wave across the channel **202** such that substantially all of the magnetic and non-magnetic objects **203a** in the fluid composition **203** are focused and constrained in a narrow band to a predetermined region within the channel **202**; (iii) at least one magnetic module **207** positioned in operable communication with the substrate **201** capable of imparting a magnetic force to the focused and constrained magnetic objects; and (iv) the at least one bifurcation point **209** positioned within the channel **202** such that the magnetic objects can be deflected away from the non-magnetic objects when the magnetic force overcomes the acoustic standing wave to allow for the magnetic objects to exit at the magnetic exit end **205**.

In one embodiment, a system is provided comprising the device **200** and a delivery module positioned in operable communication with the inlet **204** of the device to cause the fluid composition **203** to enter and move along a flowpath within the channel **202**. As used herein, the term "delivery module" refers to any module or method by which a fluid composition comprising a plurality of objects may be introduced into the system and/or device. Such module may include an item such as a syringe, pipette, beaker, flask, vial, tube or the like or alternatively, the system or device may be in communication with another device from which a fluid composition is drawn.

The system can comprise a collection module (not shown) that is in operable communication with at least one of the at least two exit ends **205**, where the collection module is arranged to collect one or more objects exiting the channel. Any collection module may be used that is suitable for the object being sorted. For example, for biological cells a sterile test tube may be used.

In some embodiments, the system and device further comprises a lid that covers the substrate. The lid may be removable, or bonded to the substrate. Materials suitable for use in the substrate and lids in accordance with the present disclosure include any material that has an acoustic impedance that is greater than that of water, or 1.49 Impedance/10⁶ kg m⁻² s. Suitable materials include, but are not limited to, plastic, silicon, pyrex, aluminum, commercial high acoustic impedance thermoplastic (e.g., W Type from the LATI). In certain embodiments, the substrate comprises silicon. In other embodiments, the lid comprises pyrex. The combination of silicon and pyrex are advantageous because it allows for the observed motion of the objects under the influence of the applied magnetic fields via a microscope.

The size, shape and and lengths of the channels can vary depending on several factors, including the size of the objects being separated, the number of objects being separated, and the like. In some embodiments, the channel width is at least 100µm, 150µm, 200µm, 250µm, 300µm, 350µm, 400µm, 450µm, 500µm, or greater. In some embodiments, the channel width is between 250 µm to 400 µm wide. In certain embodiments, the channel width is 300 µm. In certain embodiments, the channel width is between 250µm to about 300µm, with an aspect ratio (depth:width) of 1:2∼1:1. In other embodiments, the channels are in a "Y" shape and are of a size suitable for separating biological material such as cells, proteins, nucleic acids, and the like. FIG 3 provides an example for an system/device of the present disclosure suitable for separating such material. FIG. 3a shows one example layout, where the upper branch **301** is the outlet for the magnetically labeled objects and the lower branch **302** is the outlet for the unlabeled cells. Several trenches are designed along the channel **303** and near the bifurcating point **304** as the land makers to position and bond the acoustic module device and magnetic module device. In such an embodiment, the channel length from the first inlet end **305** to the at least two exit ends **306** is approximately 38mm. The channel **307** is 0.3mm and the angle between the two at least two exit ends is approximately 60°. The length and diameter of each the two exit ends is 10.13 mm and 0.2 mm, respectively. The width of the exit ends can be of any size greater than 0.1mm in order to prevent the objects from aggregating and blocking the channel. The length of the two end channels can be of any length. Moreover, the two end branches may be of the same length, or different lengths (e.g., one may be longer or shorter than the other). However, for optimal flow distribution, the hydraulic reistances of the two branches are balanced. In the example provided here, because the two branches are identical the hydraulic resistances of the two are negligible. FIG 3b is a zoom-in illustration of FIG 3a of the region near the bifurcation point, where the deviation of the bifurcating point from the central axis of the channel is 80µm (designated as δ) **308**.

FIG 4 shows a cross section of an exemplary sorting system and/or device **400** at bifurcation point in accordance with the present disclosure. As shown in FIG 4, the system and/or device comprises a silicon substrate **401** comprising a channel **402** having two exit ends **403**, **404**. Attached to the substrate is a magnetic module **405** and an acoustic module **406**. The system and/or device further comprises a lid **407** that covers the channel and is bonded to the substrate **401**.

The systems and methods of the present disclosure may be used for "positive" or "negative" sorting. For example, positive sorting involves specifically labeling the objects (e.g., cells) of interest (e.g., the "target" object) that are to be collected. Such sorting are advantageous, for example, for making a diagnostic. In negative sorting, it is the un-labeled objects that are the "target" and are desired to be purified. Negative sorting is desirous in those applications where the objects (e.g., cells) are to be reused and attached moieties are not wanted (e.g., therapy, removing trace contaminants via sorting to make a purified sample, etc.).

Various processes may be performed on the objects prior to sorting in the sorting device. Examples of these processes (when the object is a biologic, such as a cell) may include target labeling, cell lysis, and depletion. Labeling as explained in the following discussion may involve coupling magnetic particles (e.g., beads) having specific binding moieties (e.g., a portion or functional group of a molecule) to target or non-target components of an object. Lysis may involve breaking cell membranes or cell walls to release cell components (organelles, biomolecules, etc.) into the sample. Depletion involves removing a particular component or components in a sample prior to separation. An example of depletion is removal of erythrocytes from a sample by acoustic or other means. Other pre-processing operations that may be performed on- or off-chip include a variety chemical means for staining, fixing or introducing exogenous materials into the cells.

In many implementations, it is necessary to insure that the target or non-target components of object become "labeled" with magnetic beads as appropriate. This labeling operation is performed upstream (prior to) the trapping/separating stage in which the magnetic particles (e.g., beads) are captured and held stationary in a flowing fluid composition.

The magnetic particles (e.g., beads) will have a surface functional group that has a specific affinity for either the target or non-target species. Thus, when the magnetic particles (e.g., beads) come in contact with the relevant species, they bind with those species to form conjugates. An inventive operation pertains to a mechanism for facilitating the binding or conjunction of the magnetic particles (e.g., beads) with the appropriate species or component from the sample.

In some embodiments, magnetic nanoparticles (e.g., beads) with a mean diameter of 50nm are used to label the objects (e.g., cells). If magnetic nanoparticles do not have sufficient magnetic moment (which is proportional to the volume of the particle) to create sufficient magnetic force to pull the labeled cells, magnetic microparticles are also commercially available and can be used instead of magnetic nanoparticles to label the cells. The options include DYNABEADS from LIFE TECHNOLOGY, or paramagnetic beads from SPHEROTECH.

Typically, though not necessarily, this pre-sorting treatment is performed in one or more separate chambers or reservoirs located in fluid communication with the delivery module. Such chambers or reservoirs may be located on the same device (chip) or in a separate device or chip. They may have micro fluidic dimensions or even slightly larger dimensions if appropriate.

The magnetic beads, as well as the sample, and other reagents to facilitate binding are each provided to the reservoir or reservoirs. Note that the magnetic particles (e.g., beads) may be provided in a functionalized form, in which case it will be unnecessary to provide the other reagents. The magnetic particles (e.g., beads) are moved with respect to the other components in the reservoir(s) to facilitate labeling (e.g., mixing). Numerous mixing mechanisms are known in the art and include ultrasonic agitation or stirring. Examples of systems and methods that provide fluidic mixing of magnetic particles (e.g., beads) and allow for labeling and/or release of sample species are described in detail in PCT Patent Application Publication No. WO 2009/129415.

Various processes may be performed after sorting in the system and/or device of the present disclosure. These processes may be performed in the collecting module and/or downstream from the system or device. Generally, the processes may involve quantifying target objects (e.g., counting cells), extracting molecular information about the target objects (e.g., whether a particular SNP is present), and/or extacting cell based products (e.g., a differentiated version of sorted cell). Examples of suitable processes include direct detection of target objects as by optical techniques, assaying, growth of sorted cells or viruses, transformation of the target object (e.g., differentiating sorted stem cells), profiling expression patterns, and genetic characterization. Specific tools that may be employed to characterize expression profiles and/or genetic sequences include microarrays such as mRNA arrays and high throughput sequencing tools. Further discussion may be found in PCT Patent Publication No. WO 2009/129415 (*supra*).

Often post separation operations involve methods for releasing target objects from magnetic particles (e.g., beads) that have been sorted and collected in a collection module. In a typical scenario, at the end of a sorting operation, the only sample objects that remain in the collecting region are bound to magnetic particles (e.g., beads). For many applications, it is important to separate the captured objects from the magnetic particles prior to further processing.

In the post separation operations described here, some mechanism for releasing the bound object from the magnetic particle (e.g., beads) is employed. Various binding and release systems are available. These include, for example, release reagents that (1) digest a linkage chemically coupling the magnetic bead to the captured objects, (2) compete with chemical or biochemical linkage mechanisms for binding with the captured objects, and (3) cleaving the linkage with a secondary antibody. Sorted target objects may be simply concentrated, purified and/or released as described. Alternatively they can be further analyzed and/or treated.

In some embodiments, the objects (e.g., cells) that have been captured and washed and optionally released in the system and/or device as described above are exposed to one or more markers (e.g., labeled antibodies) for target objects in the sample. Certain tumor cells to be detected, for example, express two or more specific surface antigens. To detect these tumors, more than one marker may be used. This combination of antigens occurs only in certain unique tumors. After one or more labels flow through the system and/or device for a sufficient length of time, the captured objects (e.g., cells) may be washed. Thereafter, the objects (e.g., cells) can be removed from collection module for further analysis or they may be analyzed in situ. For example, the contents of collection module may be scanned with probe beams at excitation for the first and second labels if such labels or fluorophores for example. Emitted light is then detected at frequencies characteristic of the first and second labels. In certain embodiments, individual objects (e.g., cells) are imaged to characterize the contents of collection module and thereby determine the presence (or quantity) of the target tumor cells. Of course various target components other than tumor cells may be detected. Examples include pathogens such as certain bacteria or viruses.

In another embodiment, nucleic acid from a sample enters is captured by an appropriate mechanism. These nucleic acids can be detected and profiled directly without any amplification, for example using microarrays. Alternatively, PCR reagents (nucleotides, polymerase, and primers in appropriate buffers) enter the collection module and an appropriate PCR thermal cycling program is performed. The thermal cycling continues until an appropriate level of amplification is achieved. Subsequently in situ detection of amplified target nucleic acid can be performed for, e.g., genotyping or detection of a particular mutation. Alternatively, the detection can be accomplished downstream of the collection module in, e.g., a separate chamber which might contain a nucleic acid microarray or an electrophoresis medium. In another embodiment, real time PCR can be conducted in the collection module by introducing, e.g., an appropriately labeled intercalation probe or donor-quencher probe for the target sequence. The probe could be introduced with the other PCR reagents (primers, polymerase, and nucleotides for example). In situ real time PCR is appropriate for analyses in which expression levels are being analyzed. In either real time PCR or end point PCR, detection of amplified sequences can, in some embodiments, be performed in the trap by using appropriate detection apparatus such as a fluorescent microscope focused on regions of the collection module.

In some embodiments, capture elements capture and confine objects from sample to reaction chamber in situ. Thereafter, a lysing agent (e.g., a salt or detergent) is delivered to the chamber. The lysing agent may be delivered in a plug of solution and allowed to diffuse throughout the chamber, where it lyses the immobilized cells in due course. This allows the cellular genetic material to be extracted for subsequent amplification. In certain embodiments, the lysing agent may be delivered together with PCR reagents so that after a sufficient period of time has elapsed to allow the lying agent to lyse the objects and remove the nucleic acid, a thermal cycling program can be initiated and the target nucleic acid detected.

In other embodiments, sample nucleic acid is provided in a raw sample and coupled to magnetic particles (e.g., beads) containing appropriate hybridization sequences. The magnetic particles (e.g., beads) are then sorted and immobilized in the collection module. After PCR reagents are delivered to the chamber and all valves are closed, PCR can proceed via thermal cycling. During the initial temperature excursion, the captured sample nucleic acid is released from the magnetic particles (e.g., beads).

The nucleic acid amplification technique described here is a polymerase chain reaction (PCR). However, in certain embodiments, non-PCR amplification techniques may be employed such as various isothermal nucleic acid amplification techniques; e.g., real-time strand displacement amplification (SDA), rolling-circle amplification (RCA) and multiple-displacement amplification (MDA). Each of these can be performed in a collection module such as a chamber in the device containing appropriate valving and flow lines.

Besides the extraction and analysis of the nucleic acids, the captured objects themselves may be used directly as the product of the process, or they can be manipulated to produce the desired product. For example, the device may be used to isolate cells from blood or tissue as the cell-based product. Alternatively, the captured cells may be manipulated with reagents such as growth factors, chemokines, and antibodies to produce the desired cell- or molecule-based products. Multiple processes of purification and manipulation may be performed to obtain the desired product within the device.

One example operation employing the systems, devices and methods of the present disclosure is automated protein purification, particularly as protein is expressed in cell culture. Protein purification may be performed manually. However, the devices and methods of the present disclosure provide a time and labor saving automation that delivers a high purity product with low cost.

In one example, desired proteins are expressed in organisms such as virus, bacteria, insect or mammalian cells. The expressed protein may be designed such that it may be selectively isolated from background materials. This may be accomplished via adding one or more selectable amino acid tags that add a stretch of amino acid to the protein. The tag may be a His tag, FLAG tag or other epitope-based tags (E-tags). The cells (for example) are introduced to one of the sample reservoirs described herein, with magnetic particles (e.g., beads) and lyses reagents in the same or one or more reservoirs. The magnetic particles may be magnetic beads coated with a high affinity media such as NTA-agarose or other resin containing to nickel. Mixing between the various sample reservoirs is promoted via one or more of the techniques described above, e.g., pneumatic, hydraulic, or magnetic mixing. The cells are disrupted by the lysing reagent and, under suitable conditions, the magnetic particles (e.g., beads) bind with the target protein in the lysate. The raw lysate is then flowed into the magnetic separation chamber where the beads become trapped on the surface of the channel. Wash buffer is added to elute the untagged and unbound protein and other cell fragments. According to various embodiments, the magnetic separation chamber may be agitated magnetically or through other means to further remove any unbound protein stuck between trapped particles (e.g., beads). A highly stringent wash buffer may be used to further elute unwanted particles. At this point, only the target protein and bound magnetic particles (e.g., beads) remain in the chamber with very high selectivity. The target protein may be released by using a bead release agent into a small volume, optionally for further processing. Lastly, the magnetic particles (e.g., beads) may be released. Because these various operations occur on a unitary or disposable cartridge in a machine, the procedure may be preprogrammed and automated to save time and cost. This configuration may be used to selectively trap other nucleic acid related products, such as RNA, which may be so labeled so as to be similarly selectable.

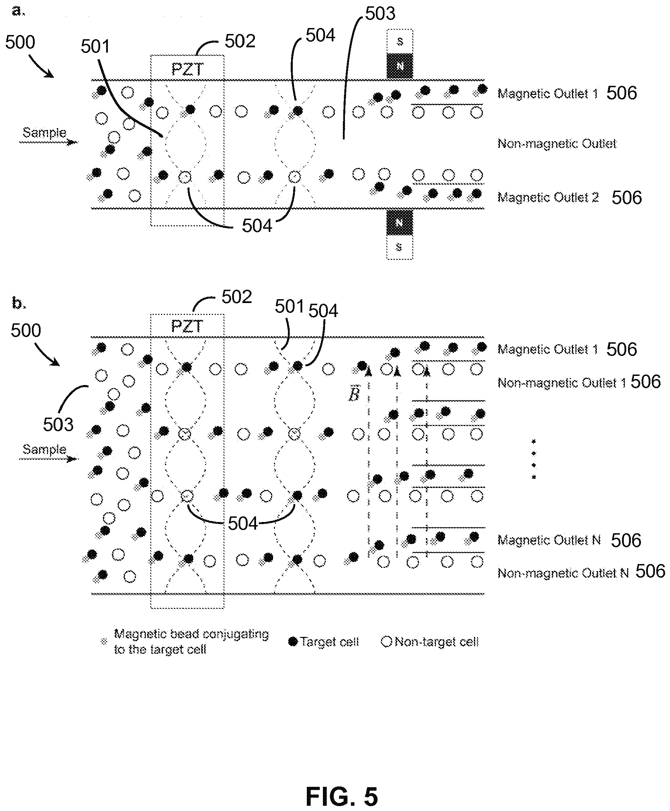

The systems and devices described herein have also shown to have great scalability. Hence, another embodiment of the present disclosure provides use of the systems and devices provided herein for high throughput sorting, in which the acoustic focusing/constraining and magnetic extraction can be performed in parallel. In one embodiment, the system or device utilizes at least two nodes. An example of such an embodiment is illustrated in FIG 5 with device **500**. As shown in FIG 5a , a whole wavelength standing wave **501** is induced by the acoustic module **502** across the channel **503** to focus and constrain the objects along two pressure nodes **504**. Two magnets **505** are symmetrically installed downstream. When the objects approach the outlet, the labeled cells are extracted and delivered to the nearby exit ends **506**.

In one embodiment, the channel of device **500** comprises two magnetic exit ends **506** and two non-magnetic exit ends **506**, wherein the acoustic standing wave is a whole wavelength standing wave **501** having two nodes **504** such that the magnetic and non-magnetic objects are focused and constrained in the narrow band along each of the two nodes **504**, wherein the device **500** comprises two magnetic modules **505** positioned symmetrically at a top side and a bottom side of the channel **503**, and wherein the channel comprises at least two bifurcation points such that the magnetic objects at each of the nodes **504** can be deflected away from the non-magnetic objects when the magnetic force overcomes the acoustic standing wave **501** to allow the magnetic objects to exit at the nearby magnetic exit end **506**.

In another embodiment, multiple nodes may be used to achieve high throughput sorting. Recent published articles have shown that particles can be focused and constrained into up to 37 nodes across an acoustic fluidic channel thereby permitting extremely high throughput without inducing turbulances (see, e.g., M. E. Piyasena, et al. Multinode Acoustic Focusing for Parallel Flow Cytometry. Analytical Chemistry, 2012(84): 1831-1839). The systems and devices of the present disclosure can accommodate multiple nodes. As shown in FIG 5b, a wider channel **503** (e.g., greater than 300 µm) is utilized whereby objects are passed over an acoustic module **502** that generates standing waves of of multiple wavelengths **501** that comprise multiple nodes **504**. One or more magenetic modules (not shown) are positioned downstream and in front of multiple exit ends **506**, thereby allowing for the high throughput separation of large numbers and/or types of objects.

In one embodiment, the channel of device **500** comprises three or more magnetic exit ends **506** and three or more non- magnetic exit ends **506**, wherein the acoustic standing wave **501** includes multiple wavelengths having three or more nodes **504** such that the magnetic and non-magnetic objects are focused and constrained in the narrow band along each of the three or more nodes **504**, wherein the device **500** comprises three or more magnetic modules (not shown) positioned in front of each of the three or more magnetic exit ends **506**, and wherein the channel comprises three or more bifurcation points such that the magnetic objects at each of the nodes **504** can be deflected away from the non-magnetic objects when the magnetic force overcomes the acoustic standing wave **501** to allow the magnetic objects to exit at each of the nearby magnetic exit ends **506**.

The systems and devices according to the present disclosure are also useful as a multiplexed separation device that can sort objects according to the amount of magnetic labels attached to the cell. In these embodiments, an acoustic excitation frequency is chosen such that the resonant wavelength corresponds to a fractional integer number of the channel width, leading to the generation of a standing wave that has multiple pressure nodes (constant pressure) and anti-nodes (pressure extrema). The objects are introduced near one side of the channel, and then magnetic force is used to pull the cells into different pressure nodal regions within the channel, depending on the amount of magnetic label on the cells. Cells that have the most magnetic particle labels will migrate the furthest, whereas cells that have the fewest number of attached magnetic labels will migrate a smaller distance. With acoustic pre-focusing to constrain the initial position of the cells before they enter the magnetic field, the precise migration distance in a given time for each type of the object with specific amount of conjugated magnetic particles (e.g., beads) can be calculated. This approach can be used to separate a diverse mixture of cells to specific channel outlets based on the amount of magnetic labels attached to each type of cell, and therefore the degree of receptor expression of a given cell type.

An example of such a multiplex sorting system and/or device **600** is shown in FIG 6. A driving frequency from the acoustic module **601** is applied to induce three pressure nodes **602** with a gap of half wavelength to each other in the transversal direction. All the objects are focused and constrained in the bottom node **602a**. Since the objects with high receptor density have larger overall magnetic moment than the objects with low receptor density, in the *same residence time* through the magnetic field generated by the magnetic module **603**, the former entities experience larger magnetic force and migrate longer distance than the latter entities. The objects with high receptor density have transversally migrated a whole wavelength and been focused and constrained in the node **602c** at the top of the schematic; meanwhile, the objects with low receptor density have only migrated a half wavelength and been focused and constraied on the central node **602b.** Downstream, the different groups can be collected at each individual exit ends **604**. For such multiplex sorting, it is possible to build either a linear magnetic field or a magnetic field with linear gradient to balance the nonlinear effect of the magnetic forcing. FIG 12 provides the results that indicate the use of the device **600** for multiplex sorting.

In one embodimend, the channel of device **600** comprises two or more magnetic exit ends **604** and at least one non-magnetic exit end **604**, wherein the width of the channel is constant for the entire length thereof past the bifurcation point and up to each of the magnetic and non-magnetic exit ends **604**, wherein the acoustic standing wave **602** includes multiple wavelengths having three or more nodes **602a, 602b, 602c** and wherein the channel defines a microchannel positioned near a first side of the channel, the microchannel having a width sufficiently narrow such that the magnetic and non-magnetic objects can be focused and constrained in the narrow band along the node nearest the first side of the channel **602a**, wherein the channel comprises a single bifurcation point such that the magnetic objects at the node nearest the first side of the channel **602a** can be deflected away from the non-magnetic objects and pulled into each of the remaining two or more nodes **602b/602c** depending on the magnetic moment of the objects to exit at each of the corresponding two or more magnetic exit ends **604.**

The multiplexing embodiments of the present disclosure may also be used in other circumstances. For example, in cases where the antigen (*e*.*g*., receptor) density on cell types in a population is unknown, the expression level of antigens on cells can be evaluated based on the number of magnetic labels they bind and their migration distance through the system and/or device. Moreover, beyond multiplex sorting by recognizing the differences of the antigen density, but using the same principle to differentiate the over-all magnetic moment, an alternative option is to deliberately label different types of objects (e.g., cells) with particles (e.g., beads) with different magnetic moments (*e*.*g*. different size or magnetic properties) so as to create a difference in the magnetic moments between two types of labeled cells.

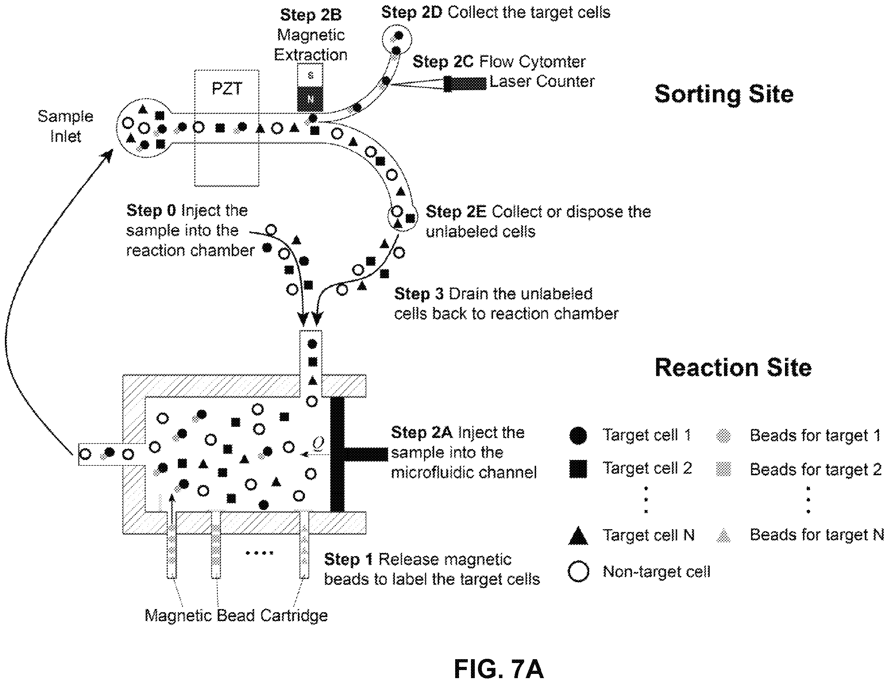

The cell sorting systems and devices of the present disclosure are also versatile in their modularity, where a variety of layouts can be employed to build a customized system. The various configurations presented herein are only for illustration purposes only and in no way are to be limiting. Other configurations are possible and dependent on the particular problem to be solved. Such configurations can be readily determined by those skilled in the art and are intended to be within the scope of the present disclosure. Using the system and/or devices of the present disclosure as the *core*, numerous *derivatives* can be created. Furthermore other sample preparation or detection *modules* can be integrated to perform multi-task procedures. For example, as shown in FIG 7a, a reaction chamber can be connected to the device to (i) label a second set of cells collected from the drain outlet from the previous run-through and then (ii) re-inject the sample back to magnetophoresis device. The circulation of re-sorting and re-labeling (Step 1 - 3) enables automatic sorting of multiple target cell types. A laser counter can be connected downstream the bifurcating point to count the sorted cells (Step 2C), which is often of interest in medical diagnosis.

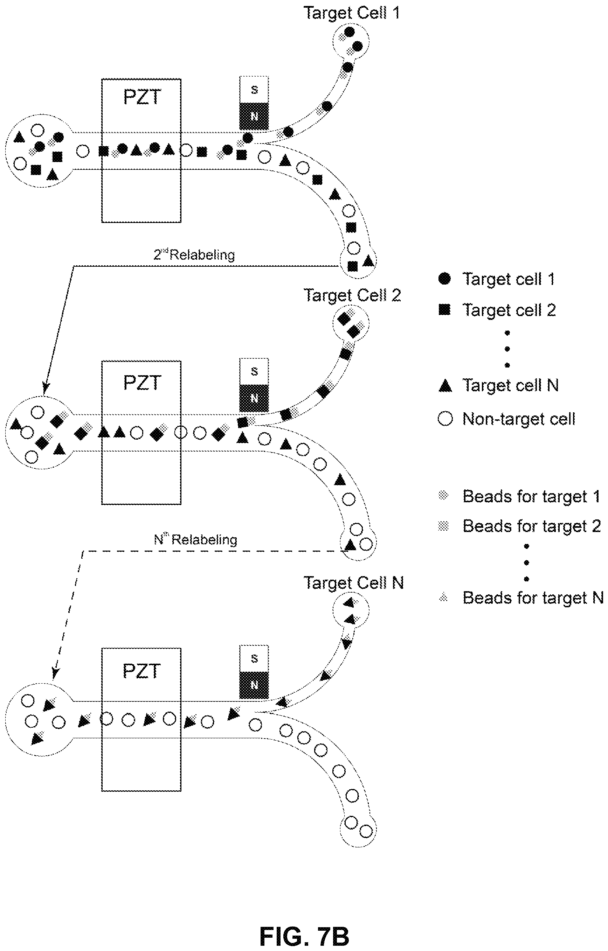

In another example, in cases where very high purity is needed, the sample can be recycled multiple times and the objects re-labeled the same type of the cells in each run-through. Such a layout can provide highly purified samples. Alternatively, and as shown in FIG 7b, multiple microfluidic devices can be arranged in a series and perform a different separation in each segment in the series as, thereby allowing for the separation of multiple types of objects (e.g., different cell types).

The present disclosure also provides methods of using the systems and devices provided herein. One aspect provides a method of sorting an object from a plurality of objects comprising, consisting of, or consisting essentially of providing a sample comprising a plurality of objects wherein at least a portion of the objects are labeled with a particle that is responsive to a magnetic force, delivering the objects to the system or device provided herein thereby causing the objects to move along a flow path, producing an acoustic standing wave across the channel such that substantially all of the objects in the sample are focused and constrained to a predetermined region within the channel; imparting a magnetic field on substantially all of the focused objects; causing the objects to deviate from the flowpath an amount at least partially dependent on the magnetic field imparted on the objects, and collecting the target objects at a location at the exit end of the substrate.

In one embodiment, a method is provided for sorting an object from a plurality of objects in a device, the method comprising: delivering a fluid composition that includes a plurality of objects to an inlet end of a channel of a device, wherein the channel defines a width that is constant for the entire length thereof up to a bifurcation point and comprising at least one magnetic exit end and at least one non-magnetic exit end thereby causing the objects to move along a flow path, wherein at least a portion of the objects are labeled with a particle that is responsive to a magnetic force; inducing an acoustic standing wave across the channel such that substantially all of the magnetic and non-magnetic objects in the fluid composition are focused and constrained in a narrow band to a predetermined region within the channel;imparting a magnetic force to the focused and constrained magnetic objects; and causing the magnetic objects to deviate from the flowpath away from the non-magnetic objects at a bifurcation point when the magnetic force overcomes the acoustic standing wave to allow for exit of the magnetic objects at the magnetic exit end.

In some embodiments, the target objects collected comprise objects that have been specifically labeled with a particle responsive to the magnetic field. In other embodiments, the target objects collected comprise objects that have not been specifically labeled with a particle responsive to the magnetic field.

In the methods, the flow rate can be between 10 µL/min to 300 µL/min. The flow rate can be between 50 µL/min to 300 µL/min. The flow rate can be between 100 µL/min to 300 µL/min.

In the method, the plurality of objects can comprise a biological material. The biological material can comprise cells, bacteria, viruses, proteins, or nucleic acids, and combinations thereof. In the method, the plurality of objects can comprise a cell.

The following examples are offered by way of illustration and not by way of limitation.

### EXAMPLES

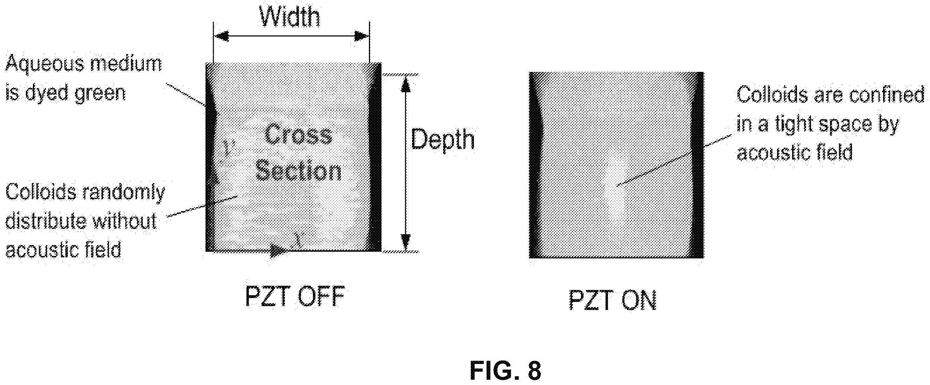

The following experiments and figures demonstrate use of the devices of the present disclosure at a flow rate of 100µL/min. For example, microscopy images shown in FIG 8 demonstrate the ability to separate magnetic and non-magnetic beads (polystyrene beads with mean diameter of 10µm from SPHEROTECH, Inc. having cell-like acoustic properties) using the acoustic focusing and constraining of the device of the present disclosure. It can be seen in FIG 12 that cells show the same acoustic behavior as the incompressible polystyrene beads, i.e., the cells are focused and constrained in the center of the channel.

FIGs 8A & B are confocal microscopy images of a magnetophoresis device showing a cross section of the device channel (A) without an acoustic field (PZT OFF) showing the uniform distribution of the rigid entities and (B) with an acoustic field (PZT ON) showing the acoustic field focusing and constraining the rigid objects such that the rigid objects are confined within a tight band around the center.

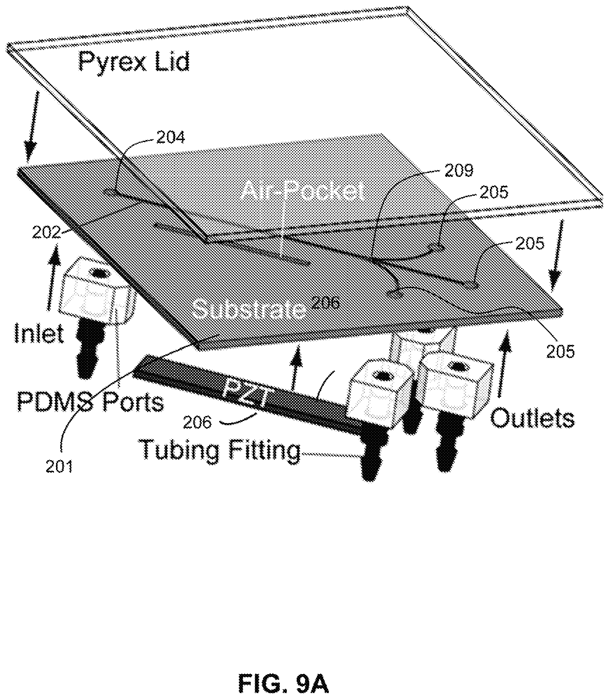

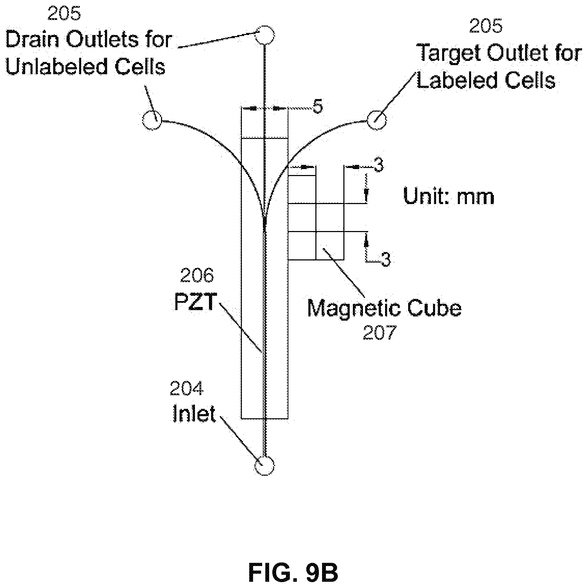

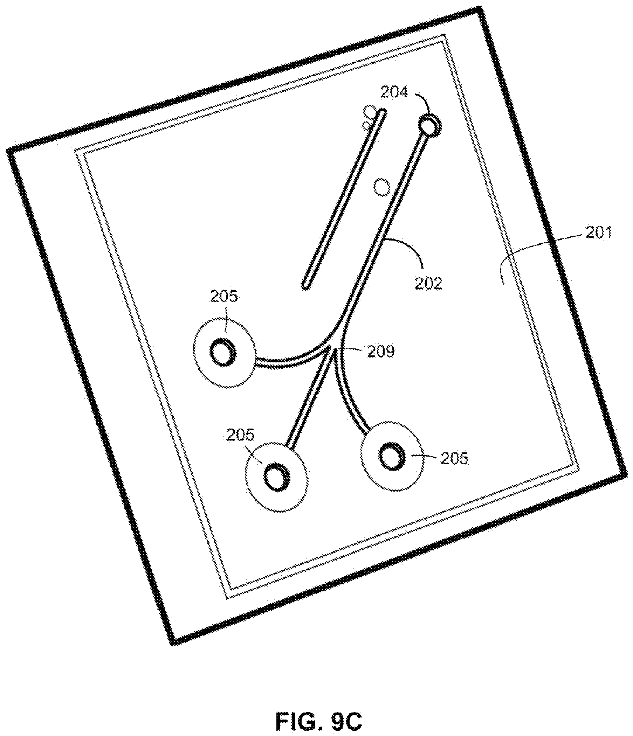

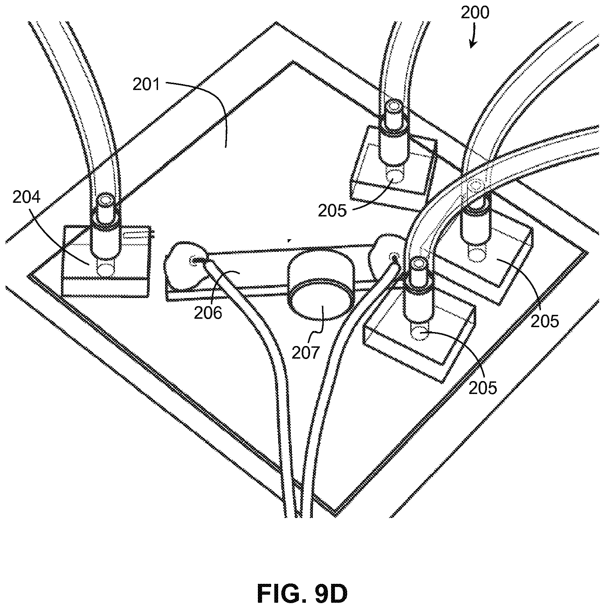

FIG. 9 shows one embodiment of the device. The microfluidic channel was developed into the silicon substrate and anodically bonded with a Pyrex glass lid. A PZT (APC INTERNATIONAL, Inc.) was aligned and bonded underneath the microfluidic channel. For the sake of expediency, a chip was used with trifurcating outlet. Despite the less than optimum configuration of this device, the feasibility of the method was demonstrated. FIG. 9A is a diagram illustrating the fabrication procedures (not to scale). FIG 9B shows an (in scale) layout of the microfluidic channel and device. FIG. 9C is a diagram showing the front side and FIG. 9C shows the back side of the completed device.

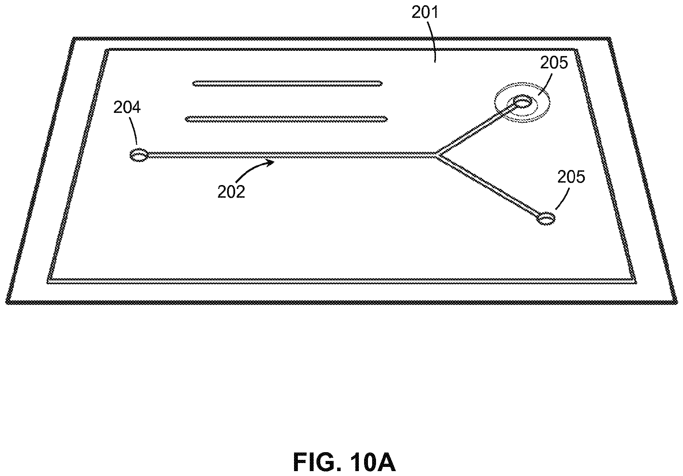

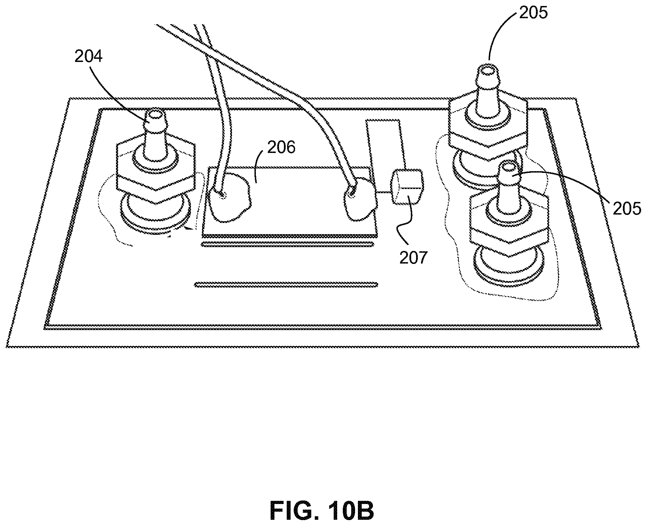

FIG.'s 10A-10B show a second embodiment of the device. FIG. 10A shows the front or top side of the device and FIG. 10B shows the back/bottom side of the magnetophoresis device. A PZT was bonded on the back side of the device via a double sided copper tape. Being applied with a sinusoidal electric signal with a frequency that matches the lowest resonant frequency of the microfluidic channel, the PZT can induce an acoustic standing wave to focus and constrain the all the cells along the central axis of the channel. A set of magnetic cubes are bonded downstream near the bifurcating point. When the cells approach the bifurcating point, the magnetically labeled cells will experience magnetic force and thereby be extracted. If necessary, the number of magnets bonded can be either increased or decreased to create a stronger or weaker magnetic field, respectively.

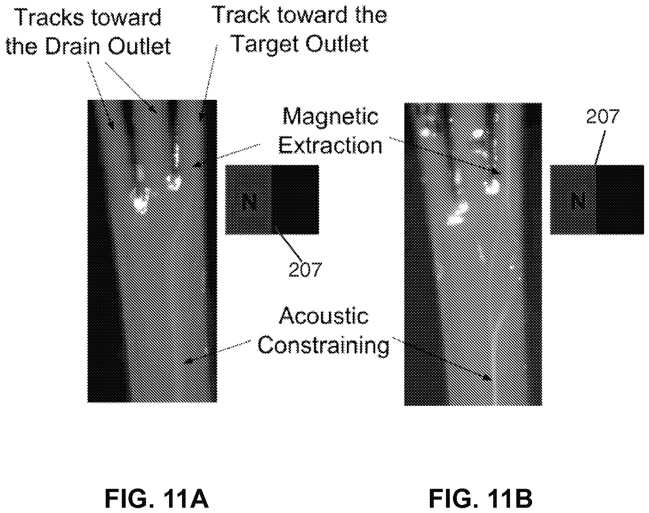

As shown in FIG 11, the device was used to separate magnetically labeled lymphocytes. The magnetically labeled lymphocytes were acoustically focused and constrained in a narrow band upstream. In the device, a magnet was bonded downstream near the bifurcating point. When the labeled lymphocytes approached the magnet along the flowpath, the cells were extracted from the initial streamlines and guided to enter the track toward the target outlet. The flow rate was 100µL/min, which is at least 10 times larger than any reported results on other microfluidic continuous sorting devices. In these experiments, commercially available magnetic beads with mean diameter of 50 nm (MILTENYI BIOTEC, Inc.) were used to label the lymphocytes.

To demonstrate use of the device for multiplex sorting, experiments were performed with larger magnetic particles than those described above. The results are shown in FIG. 12. In this experiment, the same flow rate was used as in the experiments shown in FIG. 8, but much larger magnetic microparticles with mean diameter of 2.7µm (DYNABEAD, LIFE TECHNOLOGIES) were used to simulate cells with high antigen density. In other words, the beads had much larger magnetic moment than the overall magnetic moment of the nanoparticle beads used to label the cells in FIG. 11. This result shows that the magnetic force applied on these magnetic microparticles was sufficiently large that the beads were captured by the inner surface of the microfluidic channel. Although such a result would not be optimum in designing a continuous process, this experiment suggests the potential of simultaneously sorting different cellular groups that are labeled to different extents (determined by the receptor density of each group) such that they have significantly different magnetic moments. For a given multiplex separation, an optimized combination of the magnetic particle type, the applied field, flow rate and dimension of the microfluidic channel can be chosen to perform the continuous multiplex sorting. FIG. 12 demonstrates that particles with high magnetic moment are strongly attracted to the magnet. These magnetic microparticles experienced a very large magnetic force enabling them to migrate a long distance through the magnetic field in a fixed residence time (the same as in FIG. 11).

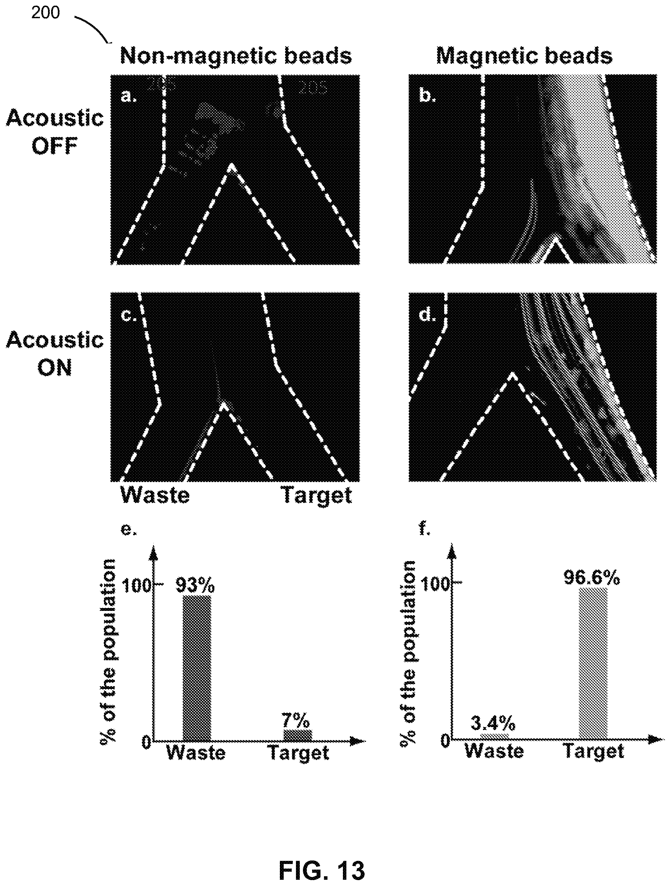

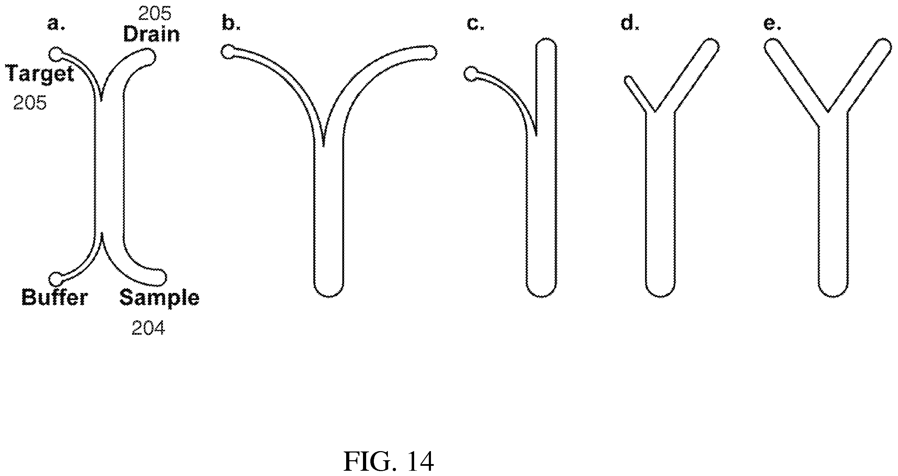

As a proof the principle of the physics underlying the device and methods of the present disclosure, microbeads were used as substitutes for cells. FIG. 13 provides the experimental results showing that under the influence of the acoustic and magnetic fields, the non-magnetic beads (panels (A), (C), and (E), with a mean diameter of 10µm) and the magnetic beads (panels (B), (D), and (F), with a mean diameter of 9.34µm) entered distinct outlets. Note that these two types of the beads exhibit similar behavior to the regular cells and magnetically labeled cells (see, e.g., T. Laurell,et al. Chip integrated strategies for acoustic separation and manipulation of cells and particles. Chem. Soc. Rev., 2007, 36, 492-506; J. D Adams, et al. Integrated acoustic and magnetic separation in microfluidic channels. Applied Physics Letters, 2009, 95: 254103).

In the microscopy images in FIG. 13, the left branch leads to the drain (Waste) outlet (i.e., for non-magnetic beads) and the right branch leads to the target outlet (i.e., for magnetic beads). FIG 13A and 13B show that without the acoustic field: i. the non-magnetic beads entered both outlets; ii. a large number of the magnetic beads were trapped near the region where the magnet was bonded, while particles flowing far from the magnets experienced low magnetic force and could exit towards the drain outlet.

When acoustic field was applied, all the beads were focused and constrained upstream. When they approached the downstream bifurcation point, as shown in FIG. 13C and 13D: the non-magnetic beads did not respond to the magnetic field and entered the drain outlet; the magnetic beads experienced a relatively homogenous magnetic force since their positions were constrained, and they were almost all deflected into streamlines that entered the target outlet. The multiple streamlines visible in Fig. 13D may reflect inhomogeneous magnetic forces applied to particles with different size or magnetic material content.

In experiments similar to those shown in FIG.'s 13C and D, flow cytometry was performed to count the beads which were collected from each outlet. FIG. 13E shows that for a total of 15,330 non-magnetic beads collected from the two outlets, 14,251 of the beads were collected from the waste outlet (or 93% of the entire population), and only 1,079 beads were collected from the target outlet (or 7% of the entire population). On the contrary, FIG. 13F shows that for a total of 97,714 magnetic beads collected, only 3,343 of them were collected from the drain outlet (or 3.4% of the entire population), and 94,371 beads were collected from the target outlet (or 96.6% of the entire population). Thus, this demonstrates the utility of the device and method for the combined use of acoustic and magnetic fields in generating high fidelity separations between un-labeled and magnetically labeled objects.

FIG.'s 14A-14E illustrate schematic drawings of different layouts of the magnetophoresis device (not in scale). A). shows that if necessary, two inlets can be built for sample (containing objects for sorting) and buffer individually. The buffer or clean agent can be injected from the buffer inlet to flush and clean the microchannel. The layouts shown as A - D, the overall cross section is conserved such that there is not acceleration or deceleration for the flow through the microchannel. Multiple syringe pumps are needed to with draw the sample since the flow rates of the target flow and drain flow are different. The shape of the branches can be curved, straight, or the combination thereof. The layout shown in E requires the simplest setting-up. The two branches are almost identical, though the flow decelerates when it approaches downstream. Only one syringe pump is needed to withdraw the flow. However, the layout can be carefully considered according to specific application. Furthermore, in these examples, the deviation of the point of bifurcation from the central axis is minimized as described above. For instance, the bifurcation point in these examples may be deviated between 15 µm and 150 µm, 25 µm and 140 µm, 35 µm and 130 µm, 45 µm and 125 µm and 50 µm to 120 µm from the central axis, in some embodiments the bifurcation point is deviated between 50 µm to 120 µm from the central axis, and in certain embodiments the bifurcation point is deviated 80 µm from the central axis.

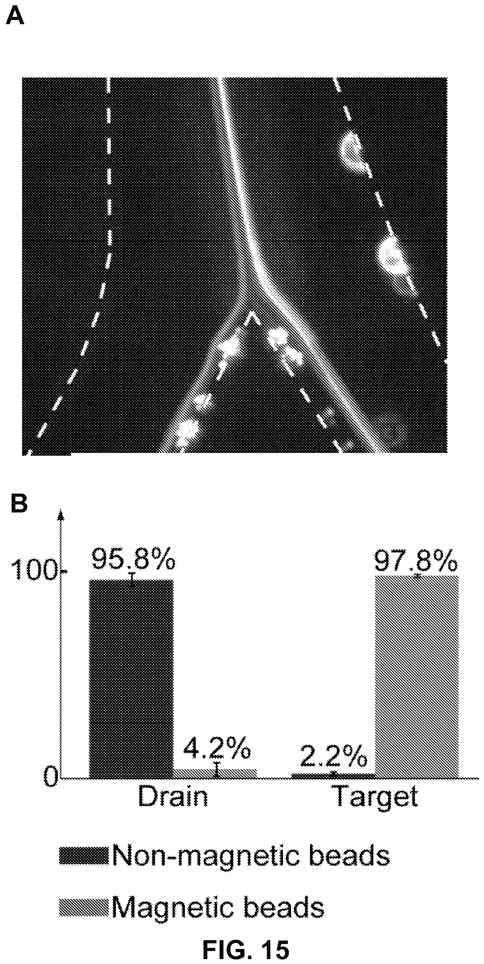

FIG.'s 15A and 15B are a confocal microscopy image and a graph, respectively, showing results of an experiment to separate magnetic and non-magnetic beads with the device similar to the results shown in FIG.'s 13A-13F. However, in this experiment, the magnetic and non-magnetic beads were contained together in a single sample that was delivered to the device. In the microscopy image shown in FIG. 15A, the left branch leads to non-magnetic outlet and the right branch leads to the magnetic outlet and shows separation of the non-magnetic and magnetic beads into each of the respective oulets after flowing through the device channel. The graph shown in FIG. 15B shows that specifically for the 6,491 non-magnetic beads detected by the flow cytometer, 6,214 (95.8%) of them entered the non-magnetic outlet while only 277 (4.2%) entered the magnetic outlet; on the contrary, for the 9,999 magnetic beads detected, 9,892 (97.8%) of them entered the magnetic outlet while only 107 (2.2%) entered the non-magnetic outlet.

Any patents or publications mentioned in this specification are indicative of the levels of those skilled in the art to which the invention pertains.

One skilled in the art will readily appreciate that the present invention is well adapted to carry out the objects and obtain the ends and advantages mentioned, as well as those inherent therein. The present examples along with the methods described herein are presently representative of preferred embodiments, are exemplary, and are not intended as limitations on the scope of the invention.

## Claims

1. A microfluidic sorting device (200) comprising:
(i) a substrate (201) comprising at least one channel (202) operable to receive a fluid composition (203) that includes a plurality of magnetic and non-magnetic objects (203a), the channel (202) defining a width that is constant for the entire length thereof up to a bifurcation point (209) and comprising at least one inlet end (204), at least one magnetic exit end (205), and at least one non-magnetic exit end (205);
(ii) an acoustic module (206) positioned in operable communication with the substrate (201) and capable of inducing an acoustic standing wave across the at least one channel (202) such that substantially all of the magnetic and non-magnetic objects (203a) in the fluid composition (203) are focused and constrained in a band to a predetermined region within the channel (202);
(iii) at least one magnetic module (207) positioned in operable communication with the substrate (201) and capable of imparting a magnetic force to the focused and constrained magnetic objects; and
(iv) the bifurcation point (209) positioned within the channel (202) such that the magnetic objects can be deflected away from the non-magnetic objects when the magnetic force overcomes the acoustic standing wave to allow for the magnetic objects to exit at the magnetic exit end (205)
**characterised in that** the at least one magnetic module (207) is downstream of the acoustic module (206).

2. The device of claim 1, wherein the channel comprises two magnetic exit ends and two non-magnetic exit ends, wherein the acoustic standing wave is a whole wavelength standing wave having two nodes such that the magnetic and non-magnetic objects are focused and constrained in the band along each of the two nodes, wherein the device comprises two magnetic modules positioned symmetrically at a top side and a bottom side of the channel, and wherein the channel comprises at least two bifurcation points such that the magnetic objects at each of the nodes can be deflected away from the non-magnetic objects when the magnetic force overcomes the acoustic standing wave to allow the magnetic objects to exit at the nearby magnetic exit end, wherein the channel width is constant for the entire length up to the at least two bifurcation points.

3. The device of claim 1, wherein the channel comprises three or more magnetic exit ends and three or more non-magnetic exit ends, wherein the acoustic standing wave includes multiple wavelengths having three or more nodes such that the magnetic and non-magnetic objects are focused and constrained in the band along each of the three or more nodes, wherein the device comprises three or more magnetic modules, each respective magnetic module positioned in front of one of the three or more magnetic exit ends, and wherein the channel comprises at least three bifurcation points such that the magnetic objects at each of the nodes can be deflected away from the non-magnetic objects when the magnetic force overcomes the acoustic standing wave to allow the magnetic objects to exit at each of the nearby magnetic exit ends, wherein the channel width is constant for the entire length up to the at least three bifurcation points.

4. The device of claim 1, wherein the channel comprises two or more magnetic exit ends and at least one non-magnetic exit end, wherein the width of the channel is constant for the entire length thereof past the bifurcation point and up to each of the magnetic and non-magnetic exit ends, wherein the acoustic standing wave includes multiple wavelengths having three or more nodes and wherein the channel defines a microchannel positioned near a first side of the channel, the microchannel having a width sufficient such that the magnetic and non-magnetic objects can be focused and constrained in the band along the node nearest the first side of the channel, wherein the channel comprises a single bifurcation point such that the magnetic objects at the node nearest the first side of the channel can be deflected away from the non-magnetic objects and pulled into each of the remaining two or more nodes depending on the magnetic moment of the objects to exit at each of the corresponding two or more magnetic exit ends.

5. The device of claim 1, wherein the bifurcation point is deviated from a central axis of the channel, optionally wherein the bifurcation point is deviated between 45 µm to about 130 µm from the central axis.

6. The device of claim 5, wherein the bifurcation is deviated 80 µm from the center axis.

7. The device of claim 1, wherein the plurality of magnetic and non-magnetic objects comprises a biological material, optionally wherein said biological material comprises cells, bacteria, viruses, proteins, or nucleic acids, and combinations thereof.

8. The device of claim 1, wherein the acoustic module comprises:
(a) a piezoelectric transducer (PZT); or
(b) a surface acoustic wave substrate (SAW), optionally wherein the surface acoustic wave substrate (SAW) comprises a piezoelectric device and an interdigitated electrode (IDE).

9. A method of sorting an object from a plurality of objects in a device, the method comprising:
delivering a fluid composition (203) that includes a plurality of objects to an inlet end (204) of a channel (202) of a device (200), wherein the channel (202) defines a width that is constant for the entire length thereof up to a bifurcation point (209) and comprising at least one magnetic exit end (205) and at least one non-magnetic exit end (205) thereby causing the objects to move along a flow path, wherein at least a portion of the objects are labeled with a particle that is responsive to a magnetic force;
inducing an acoustic standing wave across the channel such that substantially all of the magnetic and non-magnetic objects (203a) in the fluid composition (203) are focused and constrained in a band to a predetermined region within the channel (202); and
imparting a magnetic force to the focused and constrained magnetic objects, thereby causing the magnetic objects to deviate from the flow path away from the non-magnetic objects at a bifurcation point (209) when the magnetic force overcomes the acoustic standing wave to allow for exit of the magnetic objects at the magnetic exit end (205)
**characterised in that** the magnetic force is downstream of the induced acoustic standing wave.

10. The method of claim 9, further comprising collecting one or both of the magnetic and the non-magnetic objects exiting the channel.

11. The method of claim 9, wherein the channel comprises two magnetic exit ends and two non-magnetic exit ends, wherein the acoustic standing wave is a whole wavelength standing wave having two nodes such that the magnetic and non-magnetic objects are focused and constrained in the band along each of the two nodes, wherein the device comprises two magnetic modules positioned symmetrically at a top side and a bottom side of the channel, and wherein the channel comprises at least two bifurcation points such that the magnetic objects at each of the nodes can be deflected away from the non-magnetic objects when the magnetic force overcomes the acoustic standing wave to allow for the magnetic objects to exit at the nearby magnetic exit end, wherein the channel width is constant for the entire length up to the at least two bifurcation points.

12. The method of claim 9, wherein the channel comprises three or more magnetic exit ends and three or more non-magnetic exit ends, wherein the acoustic standing wave includes multiple wavelengths having three or more nodes such that the magnetic and non-magnetic objects are focused and constrained in the band along each of the three or more nodes, wherein the device comprises three or more magnetic modules, each respective magnetic module positioned in front of one of the three or more magnetic exit ends, and wherein the channel comprises at least three bifurcation points such that the magnetic objects at each of the nodes can be deflected away from the non-magnetic objects when the magnetic force overcomes the acoustic standing wave to allow for the magnetic objects to exit at each of the nearby magnetic exit ends, wherein the channel width is constant for the entire length up to the at least three bifurcation points.

13. The method of claim 9, wherein the channel comprises two or more magnetic exit ends and at least one non- magnetic exit end, wherein the width of the channel is constant for the entire length thereof past the bifurcation point and up to each of the magnetic and non-magnetic exit ends, wherein the acoustic standing wave includes multiple wavelengths having three or more nodes and wherein the channel defines a microchannel positioned near a first side of the channel, the microchannel having a width sufficient such that the magnetic and non-magnetic objects can be focused and constrained in the band along the node nearest the first side of the channel, wherein the channel has a single bifurcation point such that the magnetic objects at the node nearest the first side of the channel can be deflected away from the non-magnetic objects and pulled into each of the remaining two or more nodes depending on the magnetic moment of the objects to exit at each of the corresponding two or more magnetic exit ends.

14. The method of claim 9, wherein the objects move along the flow path at a flow rate of between 10 µL/min to 300 µL/min.

15. The method of claim 9, wherein the plurality of magnetic and non-magnetic objects comprises a biological material, optionally wherein said biological material comprises cells, bacteria, viruses, proteins, or nucleic acids, and combinations thereof.

## Patentansprüche

1. Mikrofluidische Sortiervorrichtung (200), die Folgendes umfasst:
(i) ein Substrat (201), umfassend mindestens einen Kanal (202), der betriebsfähig ist, um eine Fluidzusammensetzung (203) aufzunehmen, die eine Vielzahl von magnetischen und nichtmagnetischen Objekten (203a) umfasst, wobei der Kanal (202) eine Breite definiert, die für die gesamte Länge desselben bis zu einer Gabelungsstelle (209) konstant ist, und der mindestens ein Einlassende (204), mindestens ein magnetisches Austrittsende (205) und mindestens ein nichtmagnetisches Austrittsende (205) umfasst;
(ii) ein Akustikmodul (206), das in betriebsfähiger Verbindung mit dem Substrat (201) positioniert ist und in der Lage ist, eine stehende Akustikwelle über dem mindestens einen Kanal (202) hervorzurufen, sodass im Wesentlichen alle der magnetischen und der nichtmagnetischen Objekte (203a) in der Fluidzusammensetzung (203) in einem Band in einer vorbestimmten Region innerhalb des Kanals (202) gebündelt und eingezwängt werden;
(iii) mindestens ein magnetisches Modul (207), das in betriebsfähiger Verbindung mit dem Substrat (201) positioniert ist und in der Lage ist, eine Magnetkraft auf die gebündelten und eingezwängten magnetischen Objekte auszuüben; und
(iv) wobei die Gabelungsstelle (209) derart in dem Kanal (202) positioniert ist, dass die magnetischen Objekte von den nichtmagnetischen Objekten weg abgelenkt werden können, wenn die Magnetkraft die stehende Akustikwelle überwindet, um das Austreten der magnetischen Objekte an dem magnetischen Austrittsende (205) zu ermöglichen,
**dadurch gekennzeichnet, dass** das mindestens eine magnetische Modul (207) stromabwärts des Akustikmoduls (206) liegt.

2. Vorrichtung nach Anspruch 1, wobei der Kanal zwei magnetische Austrittsenden und zwei nichtmagnetische Austrittsenden umfasst, wobei es sich bei der stehenden Akustikwelle um eine stehende Welle ganzer Wellenlänge mit zwei Knoten handelt, sodass die magnetischen und die nichtmagnetischen Objekte entlang jedem der zwei Knoten in dem Band gebündelt und eingezwängt werden, wobei die Vorrichtung zwei magnetische Module umfasst, die symmetrisch an einer oberen Seite und einer unteren Seite des Kanals positioniert sind, und wobei der Kanal mindestens zwei Gabelungsstellen umfasst, sodass die magnetischen Objekte an jedem der Knoten von den nichtmagnetischen Objekten weg abgelenkt werden können, wenn die Magnetkraft die stehende Akustikwelle überwindet, um das Austreten der magnetischen Objekte an dem nahegelegenen magnetischen Austrittsende zu ermöglichen, wobei die Kanalbreite für die gesamte Länge bis zu den mindestens zwei Gabelungsstellen konstant ist.

3. Vorrichtung nach Anspruch 1, wobei der Kanal drei oder mehr magnetische Austrittsenden und drei oder mehr nichtmagnetische Austrittsenden umfasst, wobei die stehenden Akustikwelle mehrere Wellenlängen mit drei oder mehr Knoten umfasst, sodass die magnetischen und die nichtmagnetischen Objekte entlang jedes der drei oder mehr Knoten in dem Band gebündelt und eingezwängt werden, wobei die Vorrichtung drei oder mehr magnetische Module umfasst, wobei jedes jeweilige magnetische Modul vor einem der drei oder mehr magnetischen Austrittsenden positioniert ist, und wobei der Kanal mindestens drei Gabelungsstellen umfasst, sodass die magnetischen Objekte an jedem der Knoten von den nichtmagnetischen Objekten weg abgelenkt werden können, wenn die Magnetkraft die stehende Akustikwelle überwindet, um das Austreten der magnetischen Objekte an jedem der nahegelegenen magnetischen Austrittsenden zu ermöglichen, wobei die Kanalbreite für die gesamte Länge bis zu den mindestens drei Gabelungsstellen konstant ist.

4. Vorrichtung nach Anspruch 1, wobei der Kanal zwei oder mehr magnetische Austrittsenden und mindestens ein nichtmagnetisches Austrittsende umfasst, wobei die Breite des Kanals für die gesamte Länge desselben über die Gabelungsstelle hinaus und bis zu jedem der magnetischen und der nichtmagnetischen Austrittsenden konstant ist, wobei die stehende Akustikwelle mehrere Wellenlängen mit drei oder mehr Knoten umfasst und wobei der Kanal einen in der Nähe einer ersten Seite des Kanals positionierten Mikrokanal definiert, wobei der Mikrokanal eine Breite aufweist, die ausreicht, dass die magnetischen und die nichtmagnetischen Objekte entlang des der ersten Seite des Kanals am nächsten liegenden Knotens in dem Band gebündelt und eingezwängt werden können, wobei der Kanal eine einzige Gabelungsstelle umfasst, sodass die magnetischen Objekte an dem der ersten Seite des Kanals am nächsten liegenden Knoten von den nichtmagnetischen Objekten weg abgelenkt und abhängig von dem magnetischen Moment der Objekte in jeden der verbleibenden zwei oder mehr Knoten gezogen werden können, um an jedem der entsprechenden zwei oder mehr magnetischen Austrittsenden auszutreten.

5. Vorrichtung nach Anspruch 1, wobei die Gabelungsstelle von einer Mittelachse des Kanals abweicht, wobei optional die Gabelungsstelle zwischen 45 µm bis etwa 130 µm von der Mittelachse abweicht.

6. Vorrichtung nach Anspruch 5, wobei die Gabelung 80 µm von der Mittelachse abweicht.

7. Vorrichtung nach Anspruch 1, wobei die Vielzahl von magnetischen und nichtmagnetischen Objekten ein biologisches Material umfasst, wobei optional das biologische Material Zellen, Bakterien, Viren, Proteine oder Nukleinsäuren und Kombinationen davon umfasst.

8. Vorrichtung nach Anspruch 1, wobei das Akustikmodul Folgendes umfasst:
(a) einen piezoelektrischen Wandler (Piezoelectric Transducer, PZT); oder
(b) ein Oberflächenakustikwellensubstrat (Surface Acoustic Wave, SAW), wobei optional das Oberflächenakustikwellensubstrat (SAW) eine piezoelektrische Vorrichtung und eine interdigitierte Elektrode (IDE) umfasst.

9. Verfahren zum Aussortieren eines Objekts aus einer Vielzahl von Objekten in einer Vorrichtung, wobei das Verfahren Folgendes umfasst:
Zuführen einer Fluidzusammensetzung (203), die eine Vielzahl von Objekten umfasst, zu einem Einlassende (204) eines Kanals (202) einer Vorrichtung (200), wobei der Kanal (202) eine Breite definiert, die für die gesamte Länge desselben bis zu einer Gabelungsstelle (209) konstant ist und mindestens ein magnetisches Austrittsende (205) und mindestens ein nichtmagnetisches Austrittsende (205) umfasst, wodurch die Objekte veranlasst werden, sich entlang eines Strömungswegs zu bewegen, wobei mindestens ein Teil der Objekte mit einem Partikel markiert sind, der auf eine Magnetkraft reagiert;
Hervorrufen einer stehenden Akustikwelle über dem Kanal, sodass im Wesentlichen alle der magnetischen und der nichtmagnetischen Objekte (203a) in der Fluidzusammensetzung (203) in einem Band in einer vorbestimmten Region innerhalb des Kanals (202) gebündelt und eingezwängt werden; und
Ausüben einer Magnetkraft auf die gebündelten und eingezwängten magnetischen Objekte, wodurch die magnetischen Objekte veranlasst werden, an einer Gabelungsstelle (209) von dem Strömungsweg von den nichtmagnetischen Objekten weg abzuweichen, wenn die Magnetkraft die stehende Akustikwelle überwindet, um das Austreten der magnetischen Objekte an dem magnetischen Austrittsende (205) zu ermöglichen,
**dadurch gekennzeichnet, dass** die Magnetkraft stromabwärts der hervorgerufenen stehenden Akustikwelle ist.

10. Verfahren nach Anspruch 9, weiter umfassend das Sammeln der magnetischen und/oder der nichtmagnetischen Objekte, die aus dem Kanal austreten.

11. Verfahren nach Anspruch 9, wobei der Kanal zwei magnetische Austrittsenden und zwei nichtmagnetische Austrittsenden umfasst, wobei es sich bei der stehenden Akustikwelle um eine stehende Welle ganzer Wellenlänge mit zwei Knoten handelt, sodass die magnetischen und die nichtmagnetischen Objekte entlang jedem der zwei Knoten in dem Band gebündelt und eingezwängt werden, wobei die Vorrichtung zwei magnetische Module umfasst, die symmetrisch an einer oberen Seite und einer unteren Seite des Kanals positioniert sind, und wobei der Kanal mindestens zwei Gabelungsstellen umfasst, sodass die magnetischen Objekte an jedem der Knoten von den nichtmagnetischen Objekten weg abgelenkt werden können, wenn die Magnetkraft die stehende Akustikwelle überwindet, um das Austreten der magnetischen Objekte an dem nahegelegenen magnetischen Austrittsende zu ermöglichen, wobei die Kanalbreite für die gesamte Länge bis zu den mindestens zwei Gabelungsstellen konstant ist.

12. Verfahren nach Anspruch 9, wobei der Kanal drei oder mehr magnetische Austrittsenden und drei oder mehr nichtmagnetische Austrittsenden umfasst, wobei die stehende Akustikwelle mehrere Wellenlängen mit drei oder mehr Knoten umfasst, sodass die magnetischen und die nichtmagnetischen Objekte entlang jedes der drei oder mehr Knoten in dem Band gebündelt und eingezwängt werden, wobei die Vorrichtung drei oder mehr magnetische Module umfasst, wobei jedes jeweilige magnetische Modul vor einem der drei oder mehr magnetischen Austrittsenden positioniert ist, und wobei der Kanal mindestens drei Gabelungsstellen umfasst, sodass die magnetischen Objekte an jedem der Knoten von den nichtmagnetischen Objekten weg abgelenkt werden können, wenn die Magnetkraft die stehende Akustikwelle überwindet, um das Austreten der magnetischen Objekte an jedem der nahegelegenen magnetischen Austrittsenden zu ermöglichen, wobei die Kanalbreite für die gesamte Länge bis zu den mindestens drei Gabelungsstellen konstant ist.

13. Verfahren nach Anspruch 9, wobei der Kanal zwei oder mehr magnetische Austrittsenden und mindestens ein nichtmagnetisches Austrittsende umfasst, wobei die Breite des Kanals für die gesamte Länge desselben über die Gabelungsstelle hinaus und bis zu jedem der magnetischen und der nichtmagnetischen Austrittsenden konstant ist, wobei die stehende Akustikwelle mehrere Wellenlängen mit drei oder mehr Knoten umfasst und wobei der Kanal einen in der Nähe einer ersten Seite des Kanals positionierten Mikrokanal definiert, wobei der Mikrokanal eine Breite aufweist, die ausreicht, dass die magnetischen und die nichtmagnetischen Objekte entlang des der ersten Seite des Kanals am nächsten liegenden Knotens in dem Band gebündelt und eingezwängt werden können, wobei der Kanal eine einzige Gabelungsstelle aufweist, sodass die magnetischen Objekte an dem der ersten Seite des Kanals am nächsten liegenden Knoten von den nicht magnetischen Objekten weg abgelenkt und abhängig von dem magnetischen Moment der Objekte in jeden der verbleibenden zwei oder mehr Knoten gezogen werden können, um an jedem der entsprechenden zwei oder mehr magnetischen Austrittsenden auszutreten.

14. Verfahren nach Anspruch 9, wobei sich die Objekte mit einem Volumenstrom von zwischen 10 µl/min bis 300 µl/min entlang des Strömungswegs bewegen.

15. Verfahren nach Anspruch 9, wobei die Vielzahl von magnetischen und nichtmagnetischen Objekten ein biologisches Material umfasst, wobei optional das biologische Material Zellen, Bakterien, Viren, Proteine oder Nukleinsäuren und Kombinationen davon umfasst.

## Revendications

1. Dispositif de tri microfluidique (200) comprenant :
(i) un substrat (201) comprenant au moins un canal (202) ayant pour fonction de recevoir une composition fluide (203) qui contient une pluralité d'objets magnétiques et non magnétiques (203a), le canal (202) définissant une largeur qui est constante sur toute sa longueur jusqu'à un point de bifurcation (209) et comprenant au moins une extrémité d'entrée (204), au moins une extrémité de sortie magnétique (205) et au moins une extrémité de sortie non magnétique (205) ;
(ii) un module acoustique (206) placé en communication fonctionnelle avec le substrat (201) et apte à générer une onde stationnaire acoustique dans le canal ou les canaux (202) de telle sorte qu'essentiellement tous les objets magnétiques et non magnétiques (203a) dans la composition fluide (203) soient concentrés et confinés dans une bande au niveau d'une région prédéterminée à l'intérieur du canal (202) ;
(iii) au moins un module magnétique (207) placé en communication fonctionnelle avec le substrat (201) et apte à appliquer une force magnétique aux objets magnétiques concentrés et confinés ; et
(iv) le point de bifurcation (209) situé à l'intérieur du canal (202) de telle sorte que les objets magnétiques puissent être déviés des objets non magnétiques lorsque la force magnétique prend le dessus sur l'onde stationnaire acoustique de façon à permettre aux objets magnétiques de sortir au niveau de l'extrémité de sortie magnétique (205)
**caractérisé en ce que** le ou les module(s) magnétique(s) (207) se trouve(nt) en aval du module acoustique (206).

2. Dispositif selon la revendication 1, dans lequel le canal comprend deux extrémités de sortie magnétiques et deux extrémités de sortie non magnétiques, dans lequel l'onde stationnaire acoustique est une onde stationnaire de longueur d'onde complète comportant deux noeuds de telle sorte que les objets magnétiques et non magnétiques soient concentrés et confinés dans la bande le long de chacun des deux noeuds, le dispositif comprenant deux modules magnétiques placés symétriquement au niveau d'un côté supérieur et d'un côté inférieur du canal, et dans lequel le canal comprend au moins deux points de bifurcation de telle sorte que les objets magnétiques au niveau de chacun des noeuds puissent être déviés des objets non magnétiques lorsque la force magnétique prend le dessus sur l'onde stationnaire acoustique de façon à permettre aux objets magnétiques de sortir au niveau de l'extrémité de sortie magnétique située à proximité, dans lequel la largeur du canal est constante sur toute la longueur jusqu'aux au moins deux points de bifurcation.

3. Dispositif selon la revendication 1, dans lequel le canal comprend au moins trois extrémités de sortie magnétiques et au moins trois extrémités de sortie non magnétiques, dans lequel l'onde stationnaire acoustique comprend de multiples longueurs d'onde comportant au moins trois noeuds de telle sorte que les objets magnétiques et non magnétiques soient concentrés et confinés dans la bande le long de chacun des au moins trois noeuds, le dispositif comprenant au moins trois modules magnétiques, chaque module magnétique respectif étant placé devant l'une des au moins trois extrémités de sortie magnétiques, et dans lequel le canal comprend au moins trois points de bifurcation de telle sorte que les objets magnétiques au niveau de chacun des noeuds puissent être déviés des objets non magnétiques lorsque la force magnétique prend le dessus sur l'onde stationnaire acoustique de façon à permettre aux objets magnétiques de sortir au niveau de chacune des extrémités de sortie magnétiques situées à proximité, dans lequel la largeur du canal est constante sur toute la longueur jusqu'aux au moins trois points de bifurcation.

4. Dispositif selon la revendication 1, dans lequel le canal comprend au moins deux extrémités de sortie magnétiques et au moins une extrémité de sortie non magnétique, dans lequel la largeur du canal est constante sur toute sa longueur au-delà du point de bifurcation et jusqu'à chacune des extrémités de sortie magnétiques et non magnétique(s), dans lequel l'onde stationnaire acoustique comprend de multiples longueurs d'onde comportant au moins trois noeuds et dans lequel le canal définit un microcanal situé à proximité d'un premier côté du canal, le microcanal présentant une largeur suffisante pour que les objets magnétiques et non magnétiques puissent être concentrés et confinés dans la bande le long du noeud le plus proche du premier côté du canal, dans lequel le canal comprend un seul point de bifurcation de telle sorte que les objets magnétiques au niveau du noeud le plus proche du premier côté du canal puissent être déviés des objets non magnétiques et attirés dans chacun des au moins deux noeuds restants en fonction du moment magnétique des objets de façon à sortir au niveau de chacune des au moins deux extrémités de sortie magnétiques correspondantes.

5. Dispositif selon la revendication 1, dans lequel le point de bifurcation est dévié d'un axe central du canal, éventuellement dans lequel le point de bifurcation est dévié de 45 µm à environ 130 µm de l'axe central.

6. Dispositif selon la revendication 5, dans lequel le point de bifurcation est dévié de 80 µm de l'axe central.

7. Dispositif selon la revendication 1, dans lequel la pluralité d'objets magnétiques et non magnétiques se présentent sous la forme d'une matière biologique, éventuellement dans lequel ladite matière biologique se présente sous la forme de cellules, de bactéries, de virus, de protéines ou d'acides nucléiques, et de combinaisons de ceux-ci.

8. Dispositif selon la revendication 1, dans lequel le module acoustique se présente sous la forme :
(a) d'un transducteur piézoélectrique (PZT) ; ou
(b) d'un substrat à ondes acoustiques de surface (SAW), éventuellement dans lequel le substrat à ondes acoustiques de surface (SAW) comprend un dispositif piézoélectrique et une électrode interdigitée (IDE).

9. Procédé de tri d'un objet à partir d'une pluralité d'objets dans un dispositif, le procédé comprenant :
introduire une composition fluide (203) qui contient une pluralité d'objets dans une extrémité d'entrée (204) d'un canal (202) d'un dispositif (200), le canal (202) définissant une largeur qui est constante sur toute sa longueur jusqu'à un point de bifurcation (209) et comprenant au moins une extrémité de sortie magnétique (205) et au moins une extrémité de sortie non magnétique (205) de façon à amener ainsi les objets à se déplacer le long d'un trajet d'écoulement, au moins une partie des objets étant marqués à l'aide d'une particule réagissant à une force magnétique ;
générer une onde stationnaire acoustique dans le canal de telle sorte qu'essentiellement tous les objets magnétiques et non magnétiques (203a) dans la composition fluide (203) soient concentrés et confinés dans une bande au niveau d'une région prédéterminée à l'intérieur du canal (202) ; et
appliquer une force magnétique aux objets magnétiques concentrés et confinés, de façon à amener ainsi les objets magnétiques à se détourner du trajet d'écoulement et des objets non magnétiques au niveau d'un point de bifurcation (209) lorsque la force magnétique prend le dessus sur l'onde stationnaire acoustique de façon à permettre aux objets magnétiques de sortir au niveau de l'extrémité de sortie magnétique (205)
**caractérisé en ce que** la force magnétique se trouve en aval de l'onde stationnaire acoustique générée.

10. Procédé selon la revendication 9, comprenant en outre le fait de recueillir les objets magnétiques et/ou les objets non magnétiques sortant du canal.

11. Procédé selon la revendication 9, dans lequel le canal comprend deux extrémités de sortie magnétiques et deux extrémités de sortie non magnétiques, dans lequel l'onde stationnaire acoustique est une onde stationnaire de longueur d'onde complète comportant deux noeuds de telle sorte que les objets magnétiques et non magnétiques soient concentrés et confinés dans la bande le long de chacun des deux noeuds, dans lequel le dispositif comprend deux modules magnétiques placés symétriquement au niveau d'un côté supérieur et d'un côté inférieur du canal, et dans lequel le canal comprend au moins deux points de bifurcation de telle sorte que les objets magnétiques au niveau de chacun des noeuds puissent être déviés des objets non magnétiques lorsque la force magnétique prend le dessus sur l'onde stationnaire acoustique de façon à permettre aux objets magnétiques de sortir au niveau de l'extrémité de sortie magnétique située à proximité, dans lequel la largeur du canal est constante sur toute la longueur jusqu'aux au moins deux points de bifurcation.

12. Procédé selon la revendication 9, dans lequel le canal comprend au moins trois extrémités de sortie magnétiques et au moins trois extrémités de sortie non magnétiques, dans lequel l'onde stationnaire acoustique comprend de multiples longueurs d'onde comportant au moins trois noeuds de telle sorte que les objets magnétiques et non magnétiques soient concentrés et confinés dans la bande le long de chacun des au moins trois noeuds, dans lequel le dispositif comprend au moins trois modules magnétiques, chaque module magnétique respectif étant placé devant l'une des au moins trois extrémités de sortie magnétiques, et dans lequel le canal comprend au moins trois points de bifurcation de telle sorte que les objets magnétiques au niveau de chacun des noeuds puissent être déviés des objets non magnétiques lorsque la force magnétique prend le dessus sur l'onde stationnaire acoustique de façon à permettre aux objets magnétiques de sortir au niveau de chacune des extrémités de sortie magnétiques situées à proximité, dans lequel la largeur du canal est constante sur toute la longueur jusqu'aux au moins trois points de bifurcation.

13. Procédé selon la revendication 9, dans lequel le canal comprend au moins deux extrémités de sortie magnétiques et au moins une extrémité de sortie non magnétique, dans lequel la largeur du canal est constante sur toute sa longueur au-delà du point de bifurcation et jusqu'à chacune des extrémités de sortie magnétiques et non magnétique(s), dans lequel l'onde stationnaire acoustique comprend de multiples longueurs d'onde comportant au moins trois noeuds et dans lequel le canal définit un microcanal situé à proximité d'un premier côté du canal, le microcanal présentant une largeur suffisante pour que les objets magnétiques et non magnétiques puissent être concentrés et confinés dans la bande le long du noeud le plus proche du premier côté du canal, dans lequel le canal comprend un seul point de bifurcation de telle sorte que les objets magnétiques au niveau du noeud le plus proche du premier côté du canal puissent être déviés des objets non magnétiques et attirés dans chacun des au moins deux noeuds restants en fonction du moment magnétique des objets de façon à sortir au niveau de chacune des au moins deux extrémités de sortie magnétiques correspondantes.

14. Procédé selon la revendication 9, dans lequel les objets se déplacent le long du trajet d'écoulement à un débit de 10 µl/min à 300 µl/min.

15. Procédé selon la revendication 9, dans lequel la pluralité d'objets magnétiques et non magnétiques se présentent sous la forme d'une matière biologique, éventuellement dans lequel ladite matière biologique se présente sous la forme de cellules, de bactéries, de virus, de protéines ou d'acides nucléiques, et de combinaisons de ceux-ci.
